# EUROPEAN PATENT APPLICATION

(11) **EP 3 826 297 A1**
(43) Date of publication of application: **26.05.2021**
(21) Application number: 19836932.4
(22) Date of filing: 21.06.2019
(51) Int. Cl.: H04N 5/92, G11B 20/10, G11B 27/00, H04N 21/433, H04N 21/434, H04N 21/835

(54) **INFORMATION PROCESSING DEVICE, INFORMATION RECORDING MEDIUM, INFORMATION PROCESSING METHOD, AND PROGRAM**

(30) Priority: 18.07.2018 JP 2018135036
(71) Applicant: Sony Corporation, 108-0075 Tokyo (JP)
(72) Inventor: UCHIMURA, Kouichi, Tokyo 108-0075 (JP); UEDA, Kenjiro, Tokyo 108-0075 (JP)
(74) Representative: Witte, Weller & Partner Patentanwälte mbB
(86) International application number: PCT/JP2019/024658
(87) International publication number: WO 2020/017233

(57) **Abstract**

A configuration that can execute a process according to usage rules information inheriting usage rules information delivered by a broadcasting station is realized in using recorded content of an information recording medium. A mapping process is executed to convert set values of usage rules information according to a first standard, such as CI+ (CI Plus), received from the broadcasting station into usage rules information defined by a second standard, such as AACS, different from the first standard to record the usage rules information in the information recording medium. An apparatus that reproduces or copies the recorded content uses the content according to the usage rules information defined by AACS inheriting the usage rules information defined by CI+ (CI Plus) recorded in the information recording medium.

## Description

### [Technical Field]

The present disclosure relates to an information processing apparatus, an information recording medium, an information processing method, and a program. More specifically, the present disclosure relates to an information processing apparatus, an information recording medium, an information processing method, and a program that can inherit usage rules information, such as copy control information, of broadcast data, which is a copy source, to control disk recorded content in receiving high quality image data, such as 4K images, to be delivered from a broadcasting station in the future and recording the received data in an information recording medium, such as a disk, to use the disk recorded content.

### [Background Art]

Currently, broadcasting of high quality images, such as 4K images and 8K images, that is, UHD (Ultra High Definition) data, is being prepared in countries all over the world.

For example, a data delivery system using an MMT (MPEG Media Transport) format as a broadcast format of 4K and 8K images is examined in Japan. In addition, a data delivery system using a conventional MPEG-2TS format as a broadcast format of 4K and 8K images is examined in many countries in Europe.

In this way, high quality image broadcast of 4K images, 8K images, and the like is being prepared in countries all over the world. On the other hand, much of broadcast content is content protected by copyright, and various types of copy control and usage rules information are set on the basis of content, such as programs.

For example, various types of copy control information are set on the basis of content (programs), such as copy-allowed content, copy-prohibited content, and content in which the number of times or pieces of copies allowed is set.

The control information regarding the broadcast content is transmitted to a reception apparatus on the user side through a broadcast wave in conjunction with the program content.

The reception apparatus controls the copying process according to the received copy control information. However, in a case where the broadcast content received by the reception apparatus is recorded in an information recording medium, such as a hard disk and a BD (Blu-ray (registered trademark) Disc), there is no provision for executing copy control or usage control of the data recorded in the medium according to usage rules information transmitted by the broadcasting station. Note that a data recording and reproducing processing configuration using a BD is described in, for example, PTL 1 (Japanese Patent Laid-Open No. 2011-023071) and the like.

In this way, there is currently no clear provision for the copy control and the usage control of the content recorded in the medium in the case where the broadcast content is recorded in the medium. Therefore, the broadcasting station on the content delivery side suggests a policy of basically not allowing to record the broadcast content in the medium. However, there is a problem that this limits the usage mode of the content.

### [Citation List]

### [Patent Literature]

[PTL 1]
Japanese Patent Laid-Open No. 2011-023071

### [Summary]

### [Technical Problem]

The present disclosure has been made in view of, for example, the problem described above, and an object of the present disclosure is to provide an information processing apparatus, an information recording medium, an information processing method, and a program that can perform control according to usage rules information, such as copy control information, set in original broadcast content in a case of recording broadcast content, such as 4K images, delivered by a broadcasting station or the like in an information recording medium, such as a hard disk and a BD (Blu-ray (registered trademark) Disk), to use the broadcast content.

### [Solution to Problem]

A first aspect of the present disclosure provides an information processing apparatus including:
a data processing unit that receives content transmitted by a transmission apparatus and usage rules information corresponding to the content and that records the content and the usage rules information in an information recording medium, in which
the data processing unit is
   configured to execute a process of converting set values of usage rules information according to a first standard received from the transmission apparatus into usage rules information of a second standard different from the first standard and recording the usage rules information in the information recording medium, and
   configured to execute a mapping process using mapping data associating the set values of the usage rules information according to the first standard with set values of the usage rules information according to the second standard, to convert set values of usage rules information of different standards.

Furthermore, a second aspect of the present disclosure provides an information processing apparatus including:
a data processing unit that executes a reproduction process or a copying process of broadcast content recorded in an information recording medium, in which
the data processing unit is
   configured to acquire usage rules information included in recorded data of the information recording medium to execute a content reproduction or copying process in an allowed range recorded in the usage rules information,
the usage rules information
   includes information obtained by converting usage rules information according to a first standard that is delivered from a broadcasting station in conjunction with the broadcast content into usage rules information of a second standard different from the first standard, and
the data processing unit
   executes the content reproduction or copying process according to the usage rules information of the second standard inheriting the usage rules information according to the first standard delivered from the broadcasting station.

Furthermore, a third aspect of the present disclosure provides
an information recording medium storing recorded data including broadcast content and usage rules information corresponding to the broadcast content, in which
the usage rules information includes
information obtained by converting usage rules information according to a first standard delivered from a broadcasting station in conjunction with the broadcast content into usage rules information of a second standard different from the first standard, and
the information recording medium is capable of causing a reproduction apparatus that reproduces recorded content of the information recording medium to
execute content usage control according to the usage rules information of the second standard to thereby execute content usage control inheriting the usage rules information according to the first standard delivered from the broadcasting station.

Furthermore, a fourth aspect of the present disclosure provides
an information processing method executed by an information processing apparatus, in which
the information processing apparatus
includes a data processing unit that receives content transmitted by a transmission apparatus and usage rules information corresponding to the content and that records the content and the usage rules information in an information recording medium,
the data processing unit is
configured to execute a process of converting set values of usage rules information according to a first standard received from the transmission apparatus into usage rules information of a second standard different from the first standard and recording the usage rules information in the information recording medium, and
configured to execute a mapping process using mapping data associating the set values of the usage rules information according to the first standard with set values of the usage rules information according to the second standard to convert the set values of the usage rules information of different standards.

Furthermore, a fifth aspect of the present disclosure provides
a program causing an information processing apparatus to execute information processing, in which
the information processing apparatus
includes a data processing unit that receives content transmitted by a transmission apparatus and usage rules information corresponding to the content and that records the content and the usage rules information in an information recording medium, and
the program causes the data processing unit
to execute a process of converting set values of usage rules information according to a first standard received from the transmission apparatus into usage rules information of a second standard different from the first standard and recording the usage rules information in the information recording medium, and
to execute a mapping process using mapping data associating the set values of the usage rules information according to the first standard with set values of the usage rules information according to the second standard, to convert the set values of the usage rules information of different standards.

Note that the program of the present disclosure is, for example, a program that can be provided in a computer-readable format by a storage medium or a communication medium to an information processing apparatus or a computer system that can execute various program codes. Such a program is provided in the computer-readable format, and the information processing apparatus or the computer system realizes the process corresponding to the program.

Other objects, features, and advantages of the present disclosure will become apparent from more detailed described based on the embodiment of the present disclosure described later and the attached drawings. Note that the system in the present specification is a logical set configuration of a plurality of apparatuses, and the apparatuses of each configuration may not be in the same housing.

### [Advantageous Effects of Invention]

According to the configuration of an embodiment of the present disclosure, a configuration that can execute a process according to the usage rules information inheriting the usage rules information delivered by the broadcasting station is realized in using the recorded content of the information recording medium.

Specifically, for example, the mapping process is executed to convert the set values of the usage rules information according to the first standard, such as CI+ (CI Plus), received from the broadcasting station into the usage rules information defined by the second standard, such as AACS, different from the first standard to record the usage rules information in the information recording medium. An apparatus that reproduces or copies the recorded content uses the content according to the usage rules information defined by AACS inheriting the usage rules information defined by CI+ (CI Plus) recorded in the information recording medium.

The present configuration realizes the configuration that can execute the process according to the usage rules information inheriting the usage rules information delivered by the broadcasting station in using the recorded content of the information recording medium.

Note that the advantageous effects described in the present specification are illustrative only, and the advantageous effects are not limited. There may also be additional advantageous effects.

### [Brief Description of Drawings]

[FIG. 1]

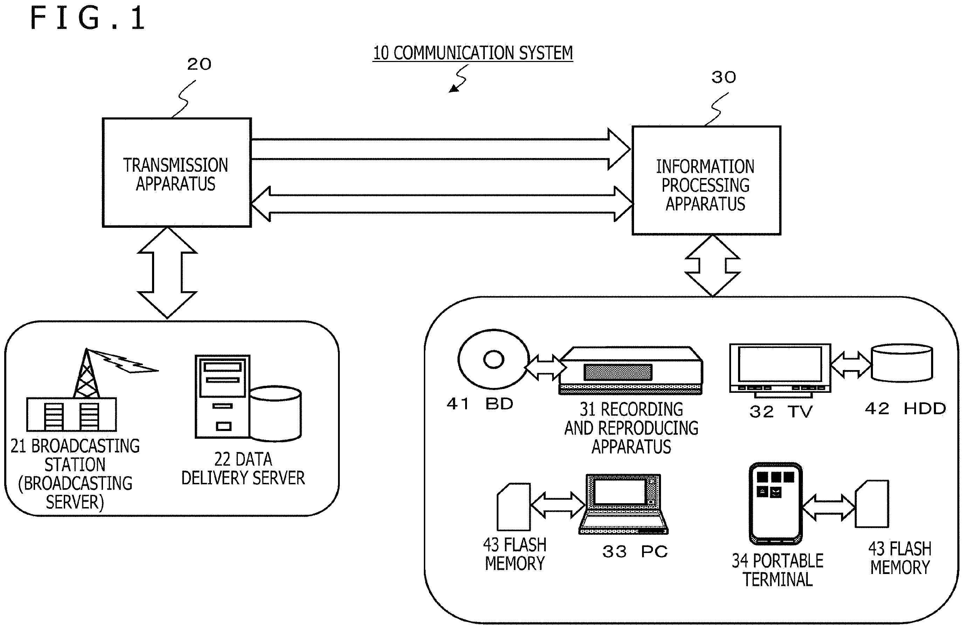

   FIG. 1 is a diagram describing a usage configuration example of an information processing apparatus that executes a process of the present disclosure.
[FIG. 2]

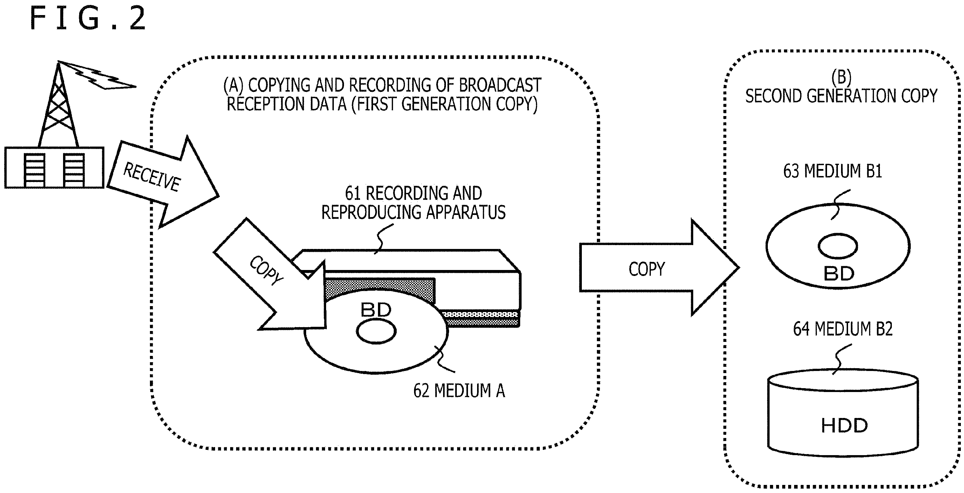

   FIG. 2 depicts diagrams describing an example of a copying process of data executed by the information processing apparatus.
[FIG. 3]

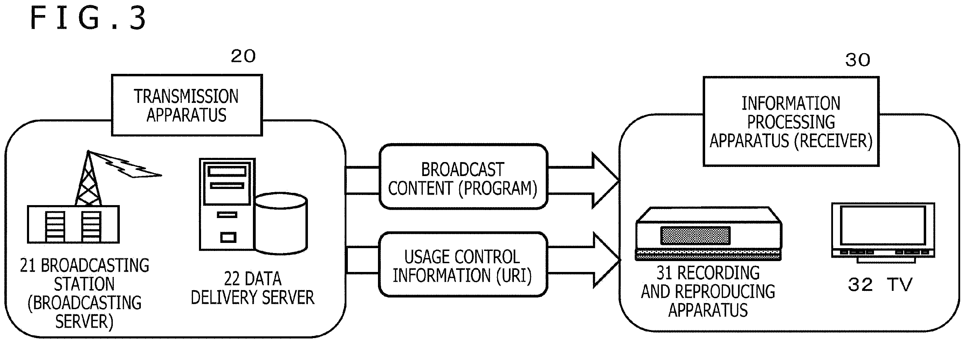

   FIG. 3 is a diagram describing transmission data from a transmission apparatus, such as a broadcasting station, to the information processing apparatus (reception apparatus).
[FIG. 4]

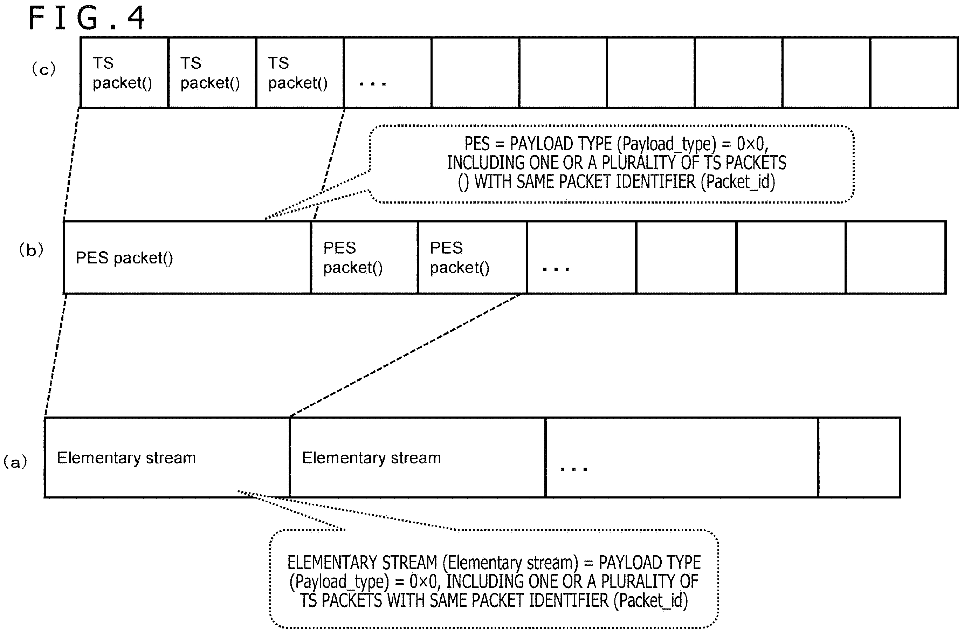

   FIG. 4 depicts diagrams describing an MPEG-2TS format.
[FIG. 5]

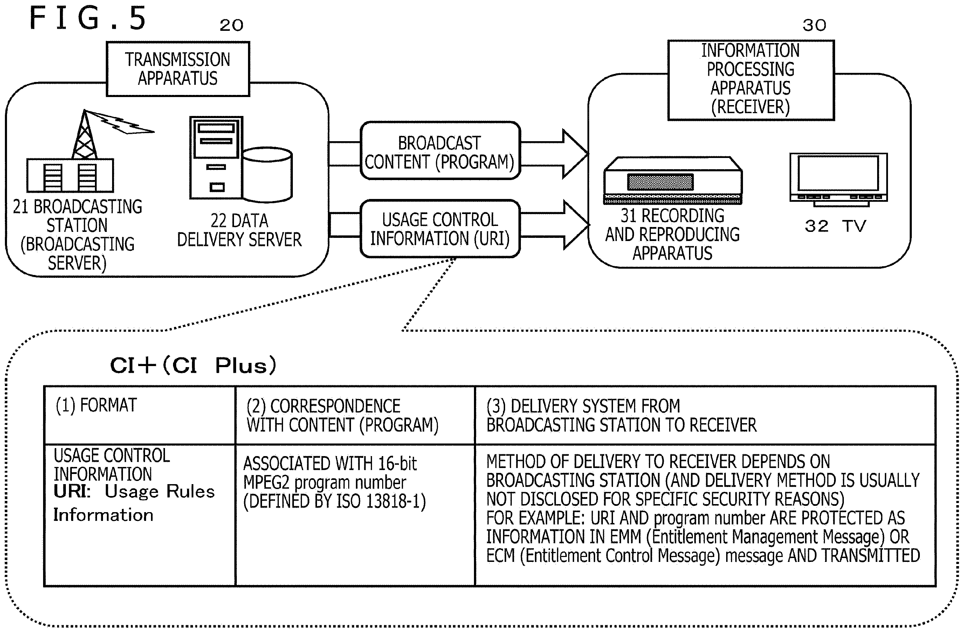

   FIG. 5 is a diagram describing data defined by CI+ (CI Plus) as an example of usage rules information transmitted from the transmission apparatus, such as a broadcasting station, to the information processing apparatus (reception apparatus).
[FIG. 6]

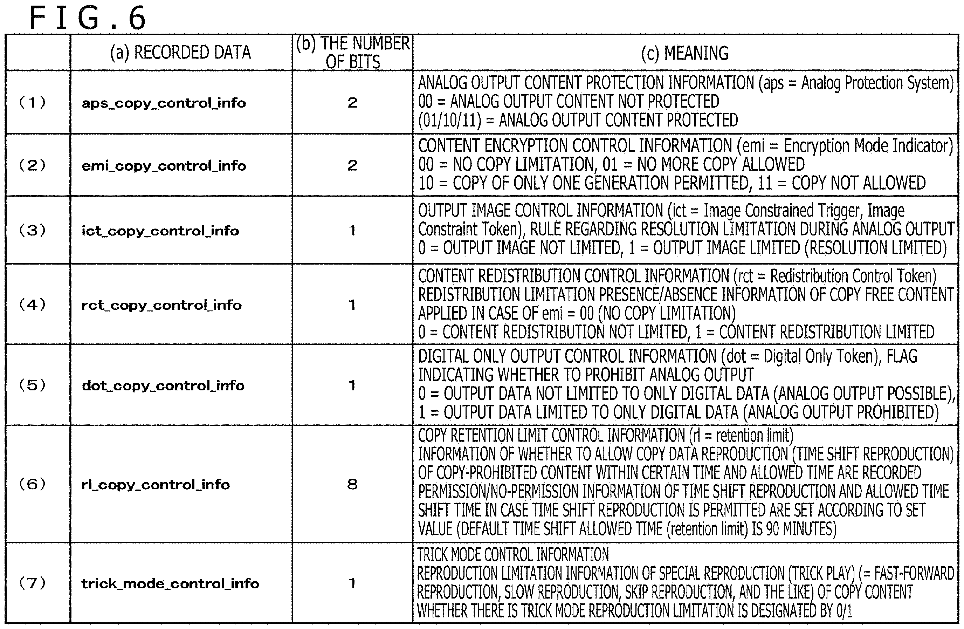

   FIG. 6 is a diagram describing data defined by CI+ (CI Plus) as an example of the usage rules information transmitted from the transmission apparatus, such as a broadcasting station, to the information processing apparatus (reception apparatus).
[FIG. 7]

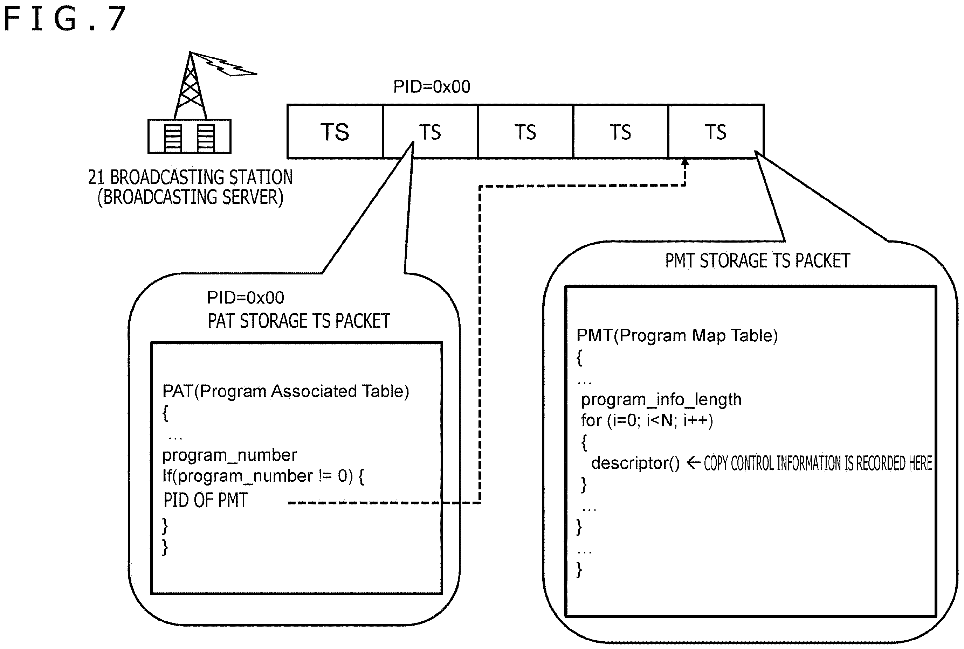

   FIG. 7 is a diagram describing an example of a transmission system in a case of transmitting the usage rules information from the transmission apparatus.
[FIG. 8]

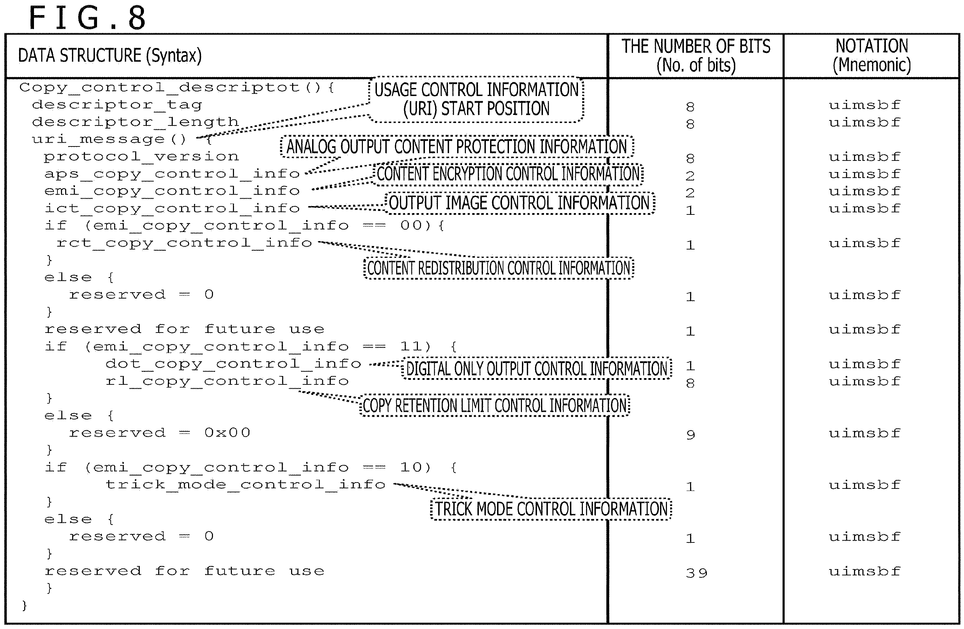

   FIG. 8 is a diagram describing an example of recorded data of a PMT that can be used in the case of transmitting the usage rules information from the transmission apparatus.
[FIG. 9]

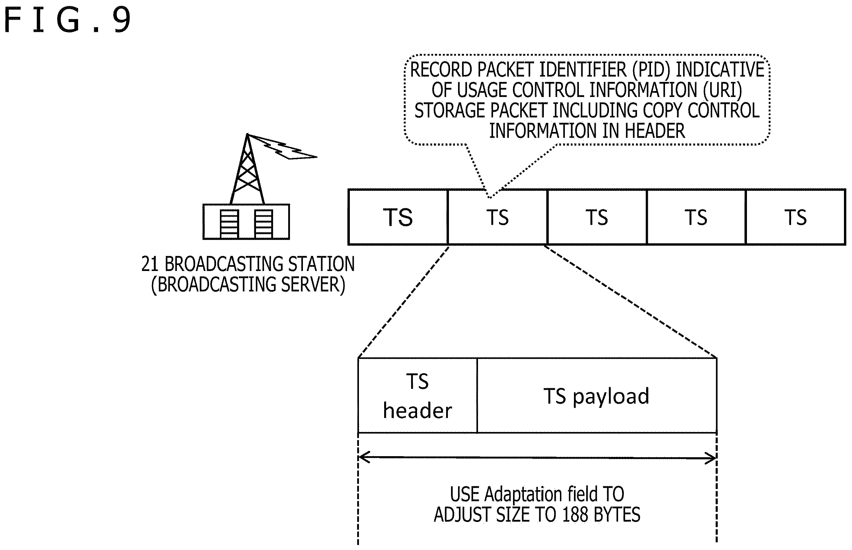

   FIG. 9 is a diagram describing an example of the transmission system in the case of transmitting the usage rules information from the transmission apparatus.
[FIG. 10]

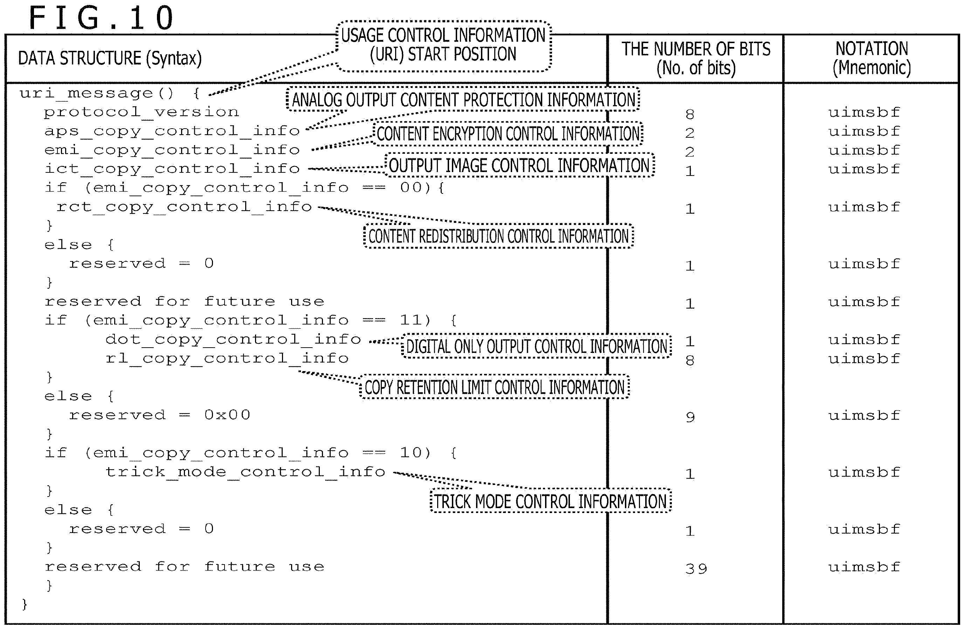

   FIG. 10 is a diagram describing an example of TS payload data that can be used in the case of transmitting the usage rules information from the transmission apparatus.
[FIG. 11]

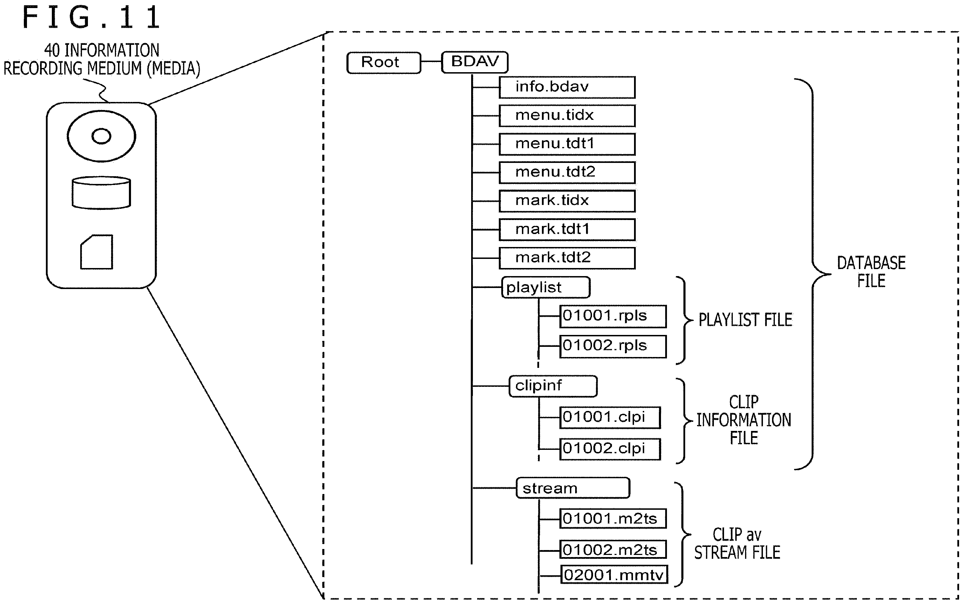

   FIG. 11 is a diagram describing a BDAV format.
[FIG. 12]

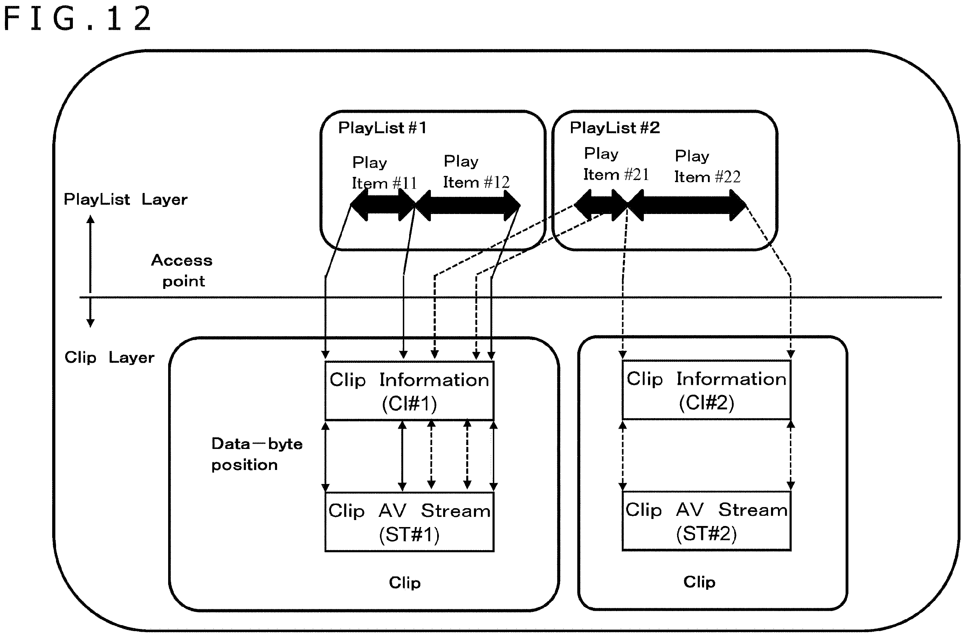

   FIG. 12 is a diagram describing a data reproduction process example according to the BDAV format.
[FIG. 13]

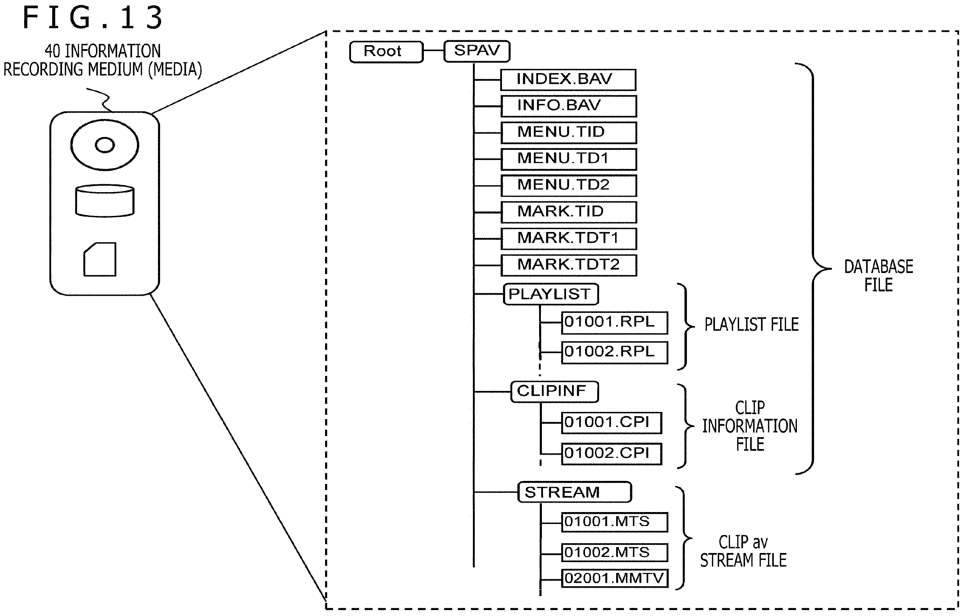

   FIG. 13 is a diagram describing an SPAV format.
[FIG. 14]

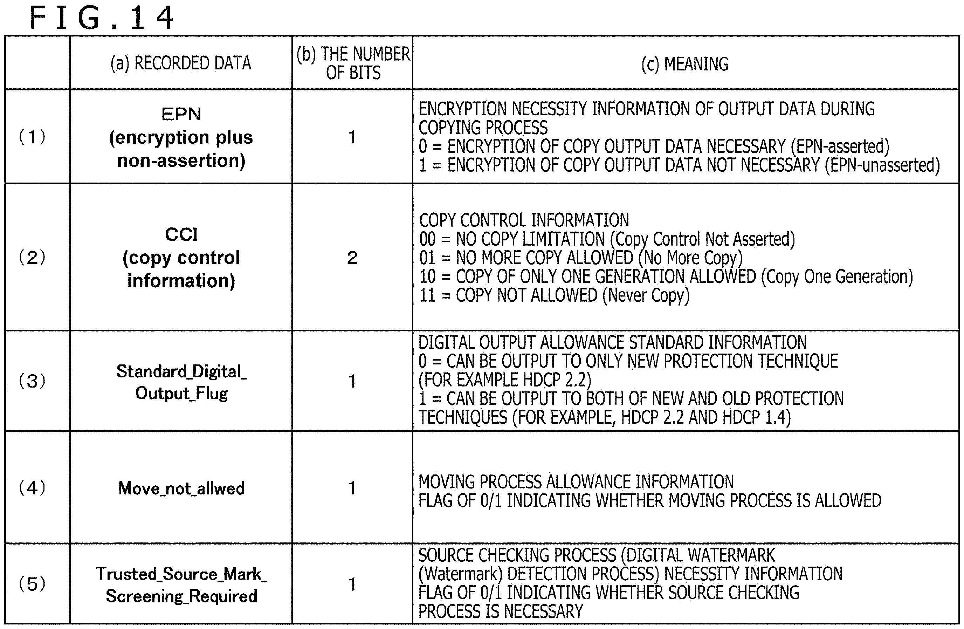

   FIG. 14 is a diagram describing usage rules information defined by AACS 2.
[FIG. 15]

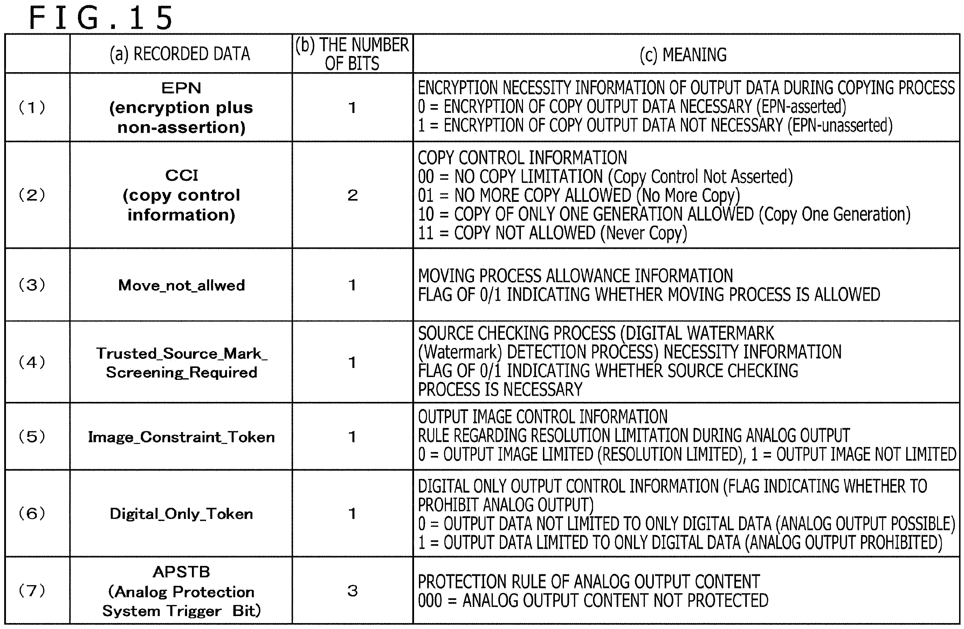

   FIG. 15 is a diagram for describing usage rules information defined by AACS 1.
[FIG. 16]

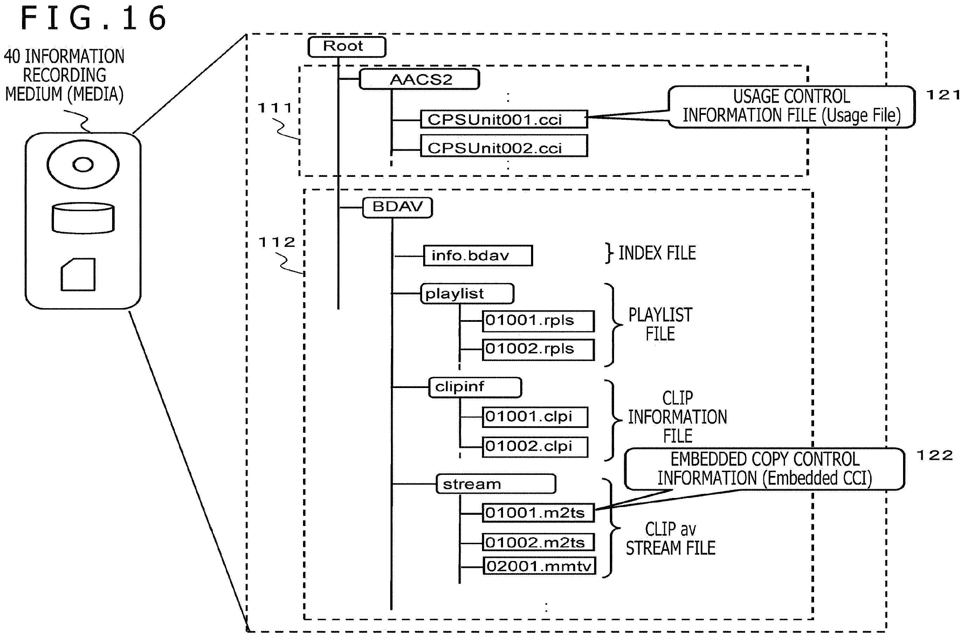

   FIG. 16 is a diagram describing the BDAV format including AACS management data.
[FIG. 17]

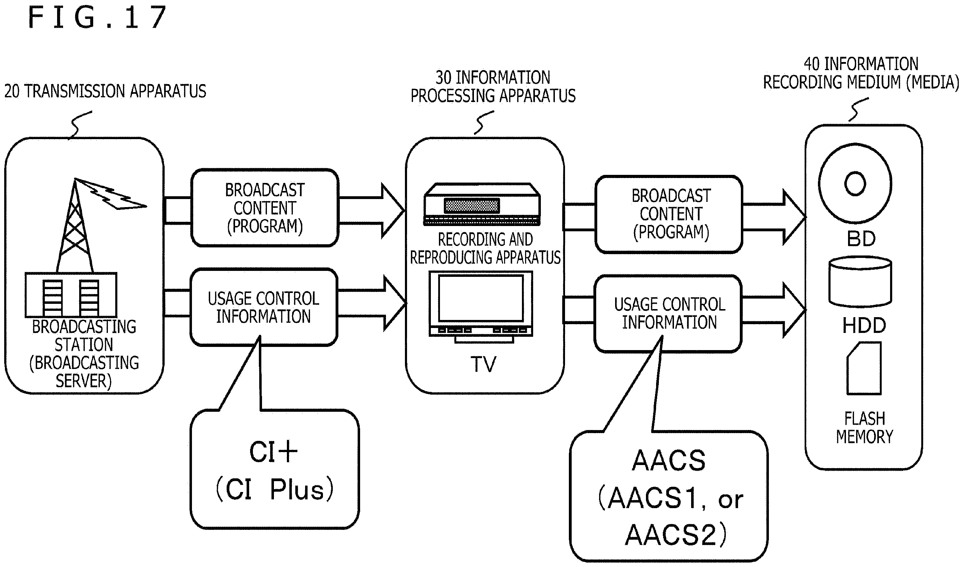

   FIG. 17 is a diagram describing data transmitted from the transmission apparatus, such as a broadcasting station, to the information processing apparatus (reception apparatus) and data recorded in an information recording medium by the information processing apparatus.
[FIG. 18]

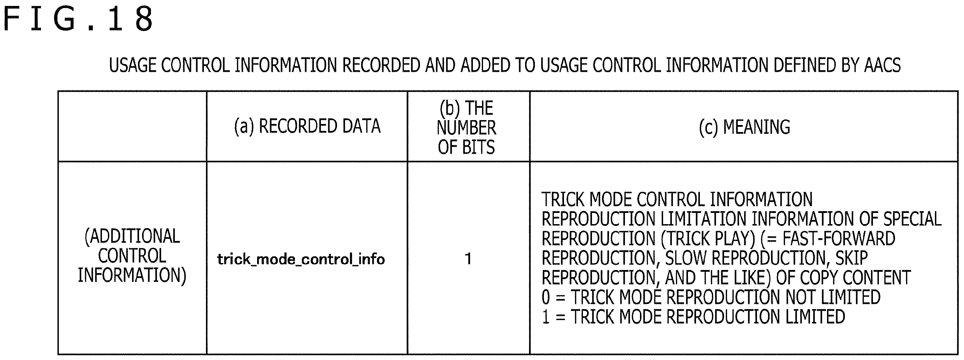

   FIG. 18 is a diagram describing trick mode control information.
[FIG. 19]

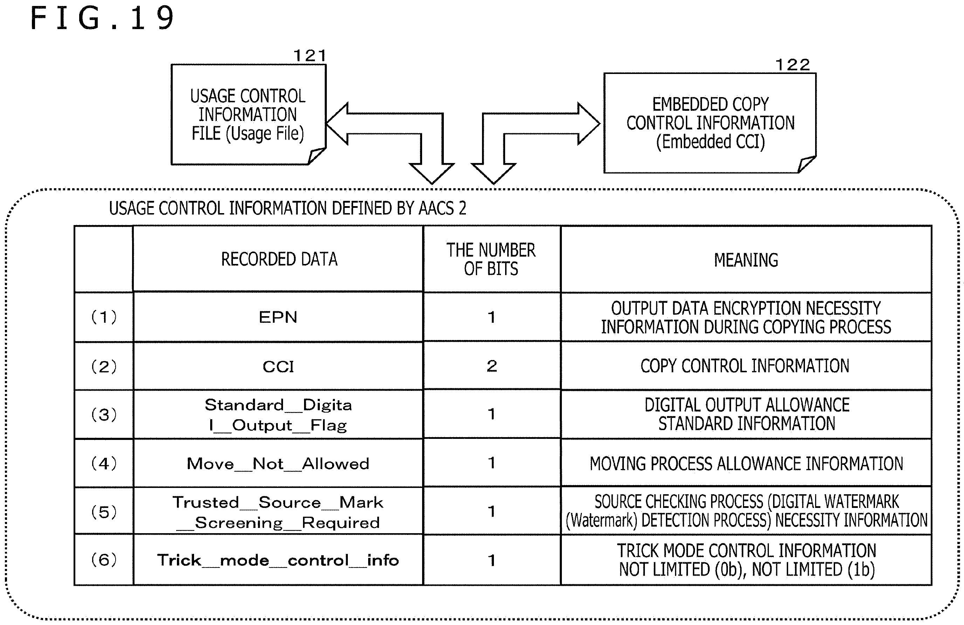

   FIG. 19 is a diagram describing an example of the usage rules information defined by AACS 2 recorded in the information recording medium by the information processing apparatus.
[FIG. 20]

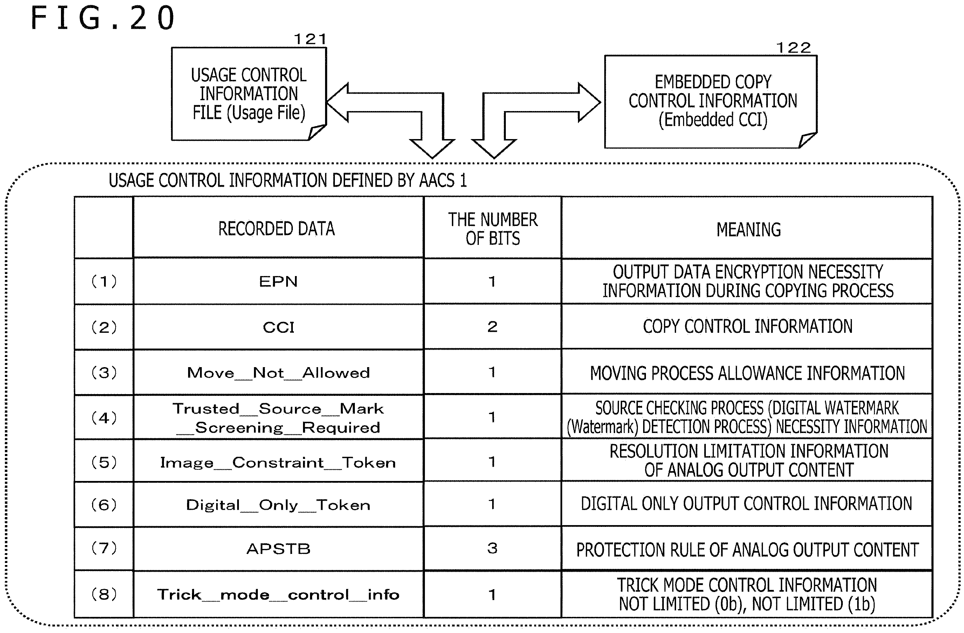

   FIG. 20 is a diagram describing an example of the usage rules information defined by AACS 1 recorded in the information recording medium by the information processing apparatus.
[FIG. 21]

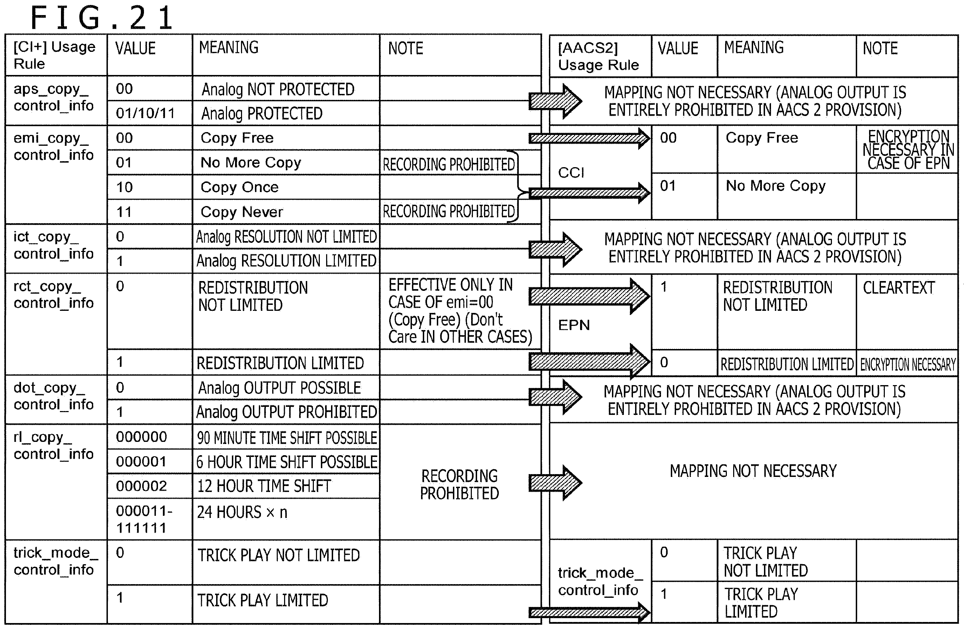

   FIG. 21 is a diagram describing mapping data from usage rules information defined by CI+ (CI Plus) delivered by the broadcasting station to the usage rules information defined by AACS 2.
[FIG. 22]

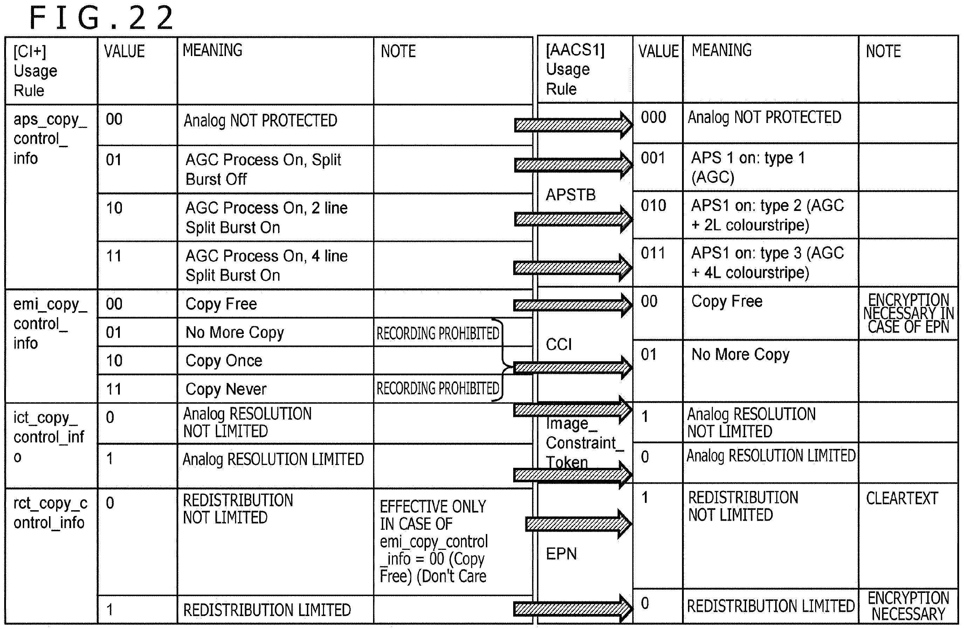

   FIG. 22 is a diagram describing mapping data from the usage rules information defined by CI+ (CI Plus) delivered by the broadcasting station to the usage rules information defined by AACS 1.
[FIG. 23]

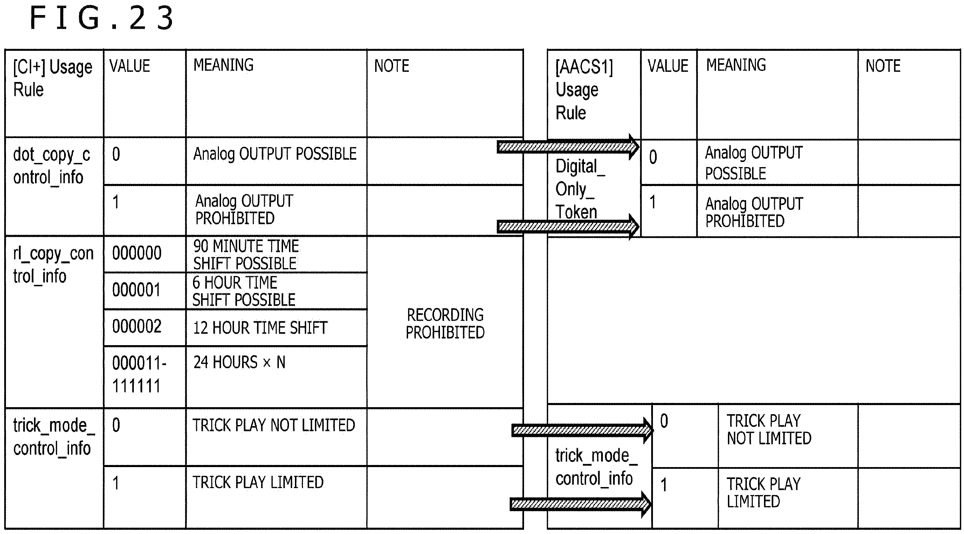

   FIG. 23 is a diagram describing mapping data from the usage rules information defined by CI+ (CI Plus) delivered by the broadcasting station to the usage rules information defined by AACS 1.
[FIG. 24]

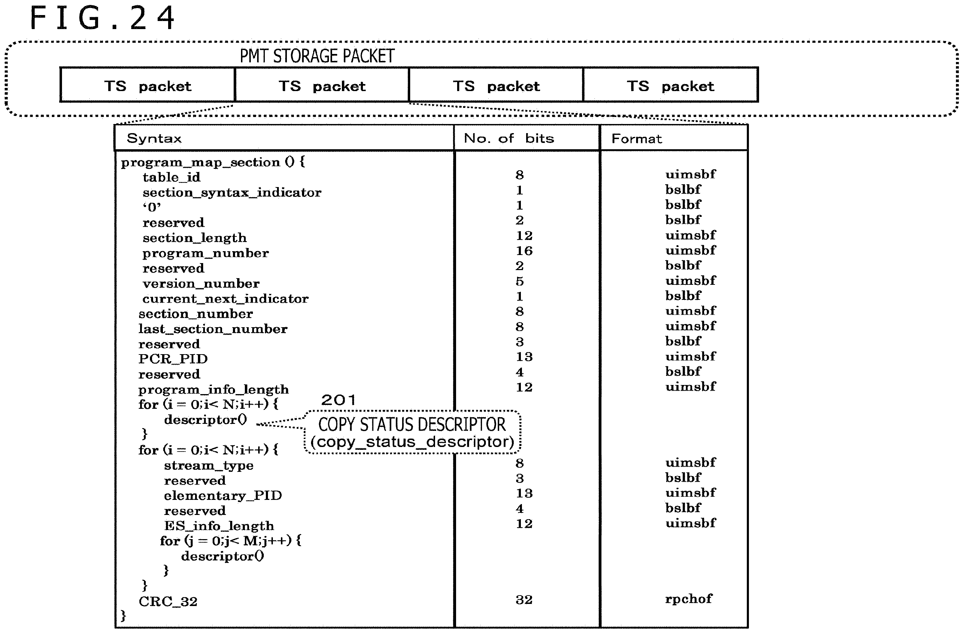

   FIG. 24 is a diagram describing the PMT (program map table) as a recording place of the usage rules information defined by AACS.
[FIG. 25]

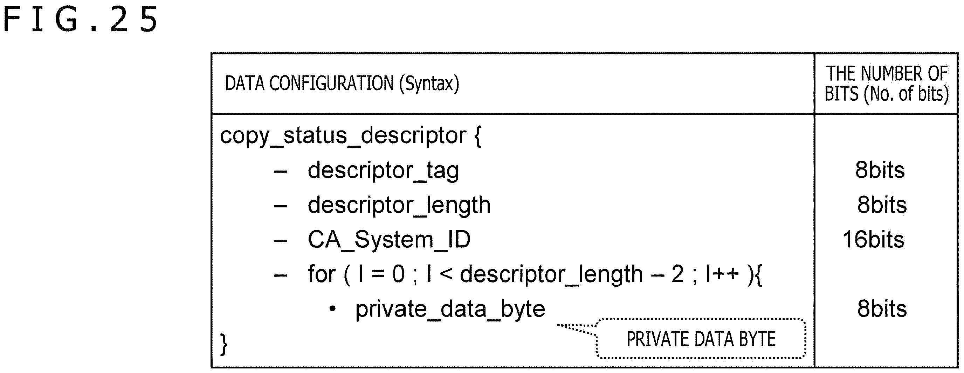

   FIG. 25 is a diagram describing an example of recorded data of the PMT (program map table) as a recording place of the usage rules information defined by AACS.
[FIG. 26]

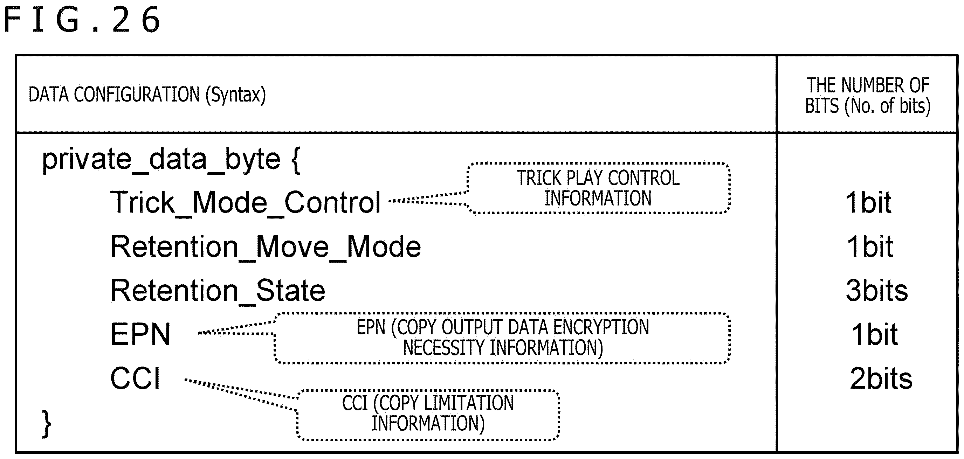

   FIG. 26 is a diagram describing an example of the recorded data of the PMT (program map table) as a recording place of the usage rules information defined by AACS.
[FIG. 27]

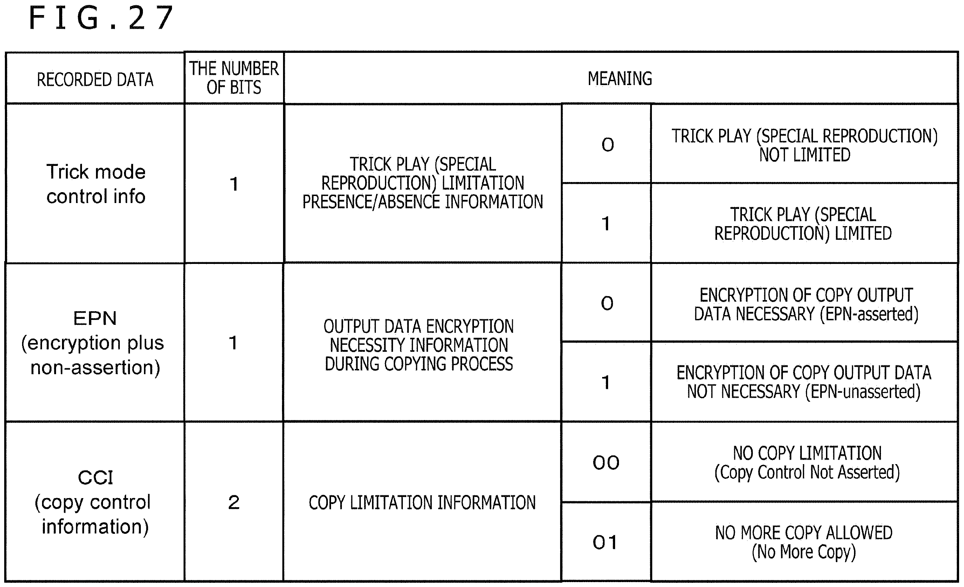

   FIG. 27 is a diagram describing an example of the recorded data of the PMT (program map table) as a recording place of the usage rules information defined by AACS.
[FIG. 28]

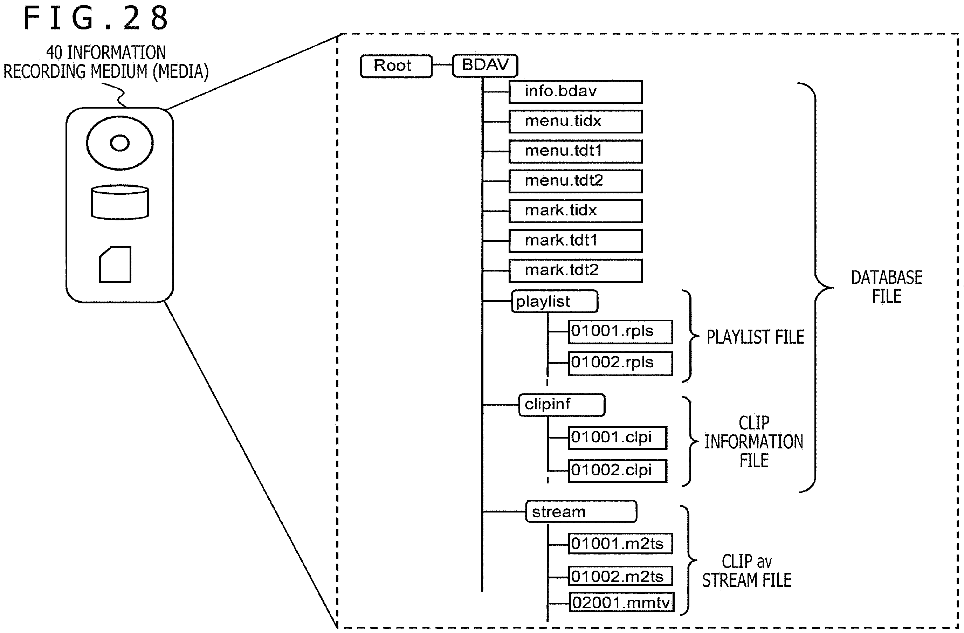

   FIG. 28 is a diagram describing an example of a process of recording the usage rules information in a playlist file and a clip information file.
[FIG. 29]

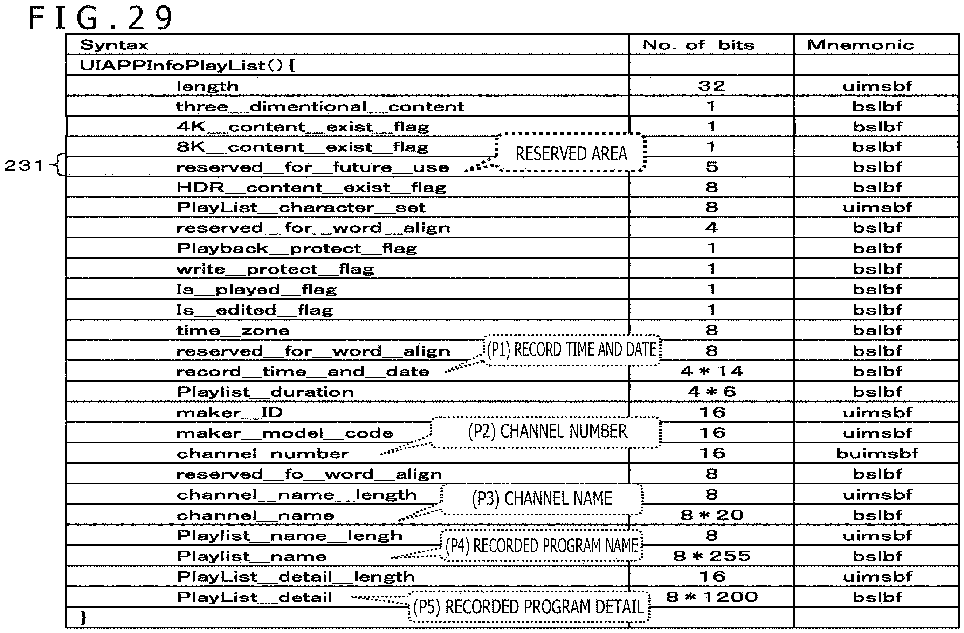

   FIG. 29 is a diagram describing an example of a process of recording the usage rules information in the playlist file.
[FIG. 30]

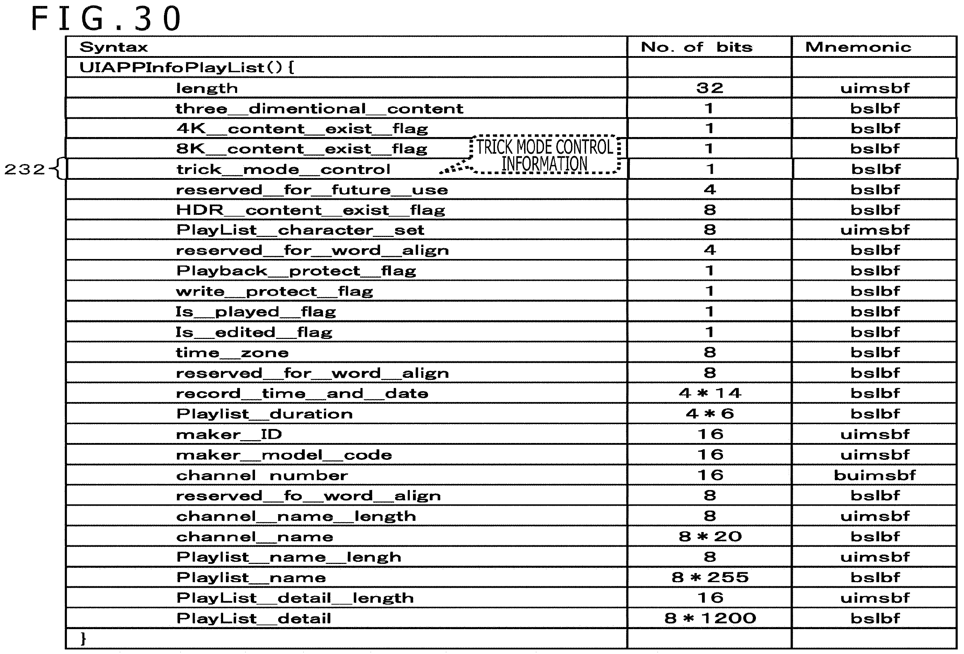

   FIG. 30 is a diagram describing an example of the process of recording the usage rules information in the playlist file.
[FIG. 31]

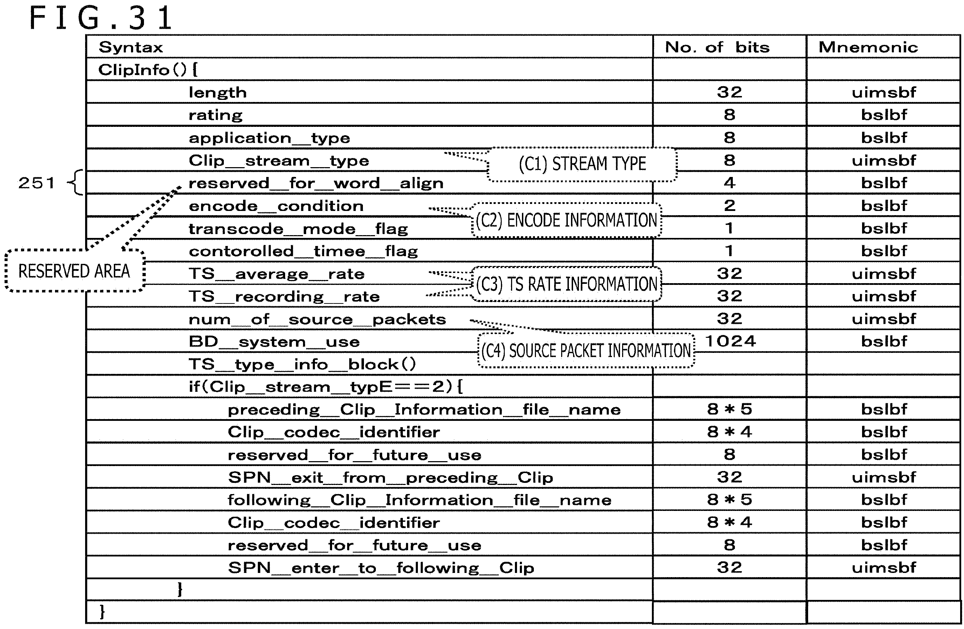

   FIG. 31 is a diagram describing an example of a process of recording the usage rules information in the clip information file.
[FIG. 32]

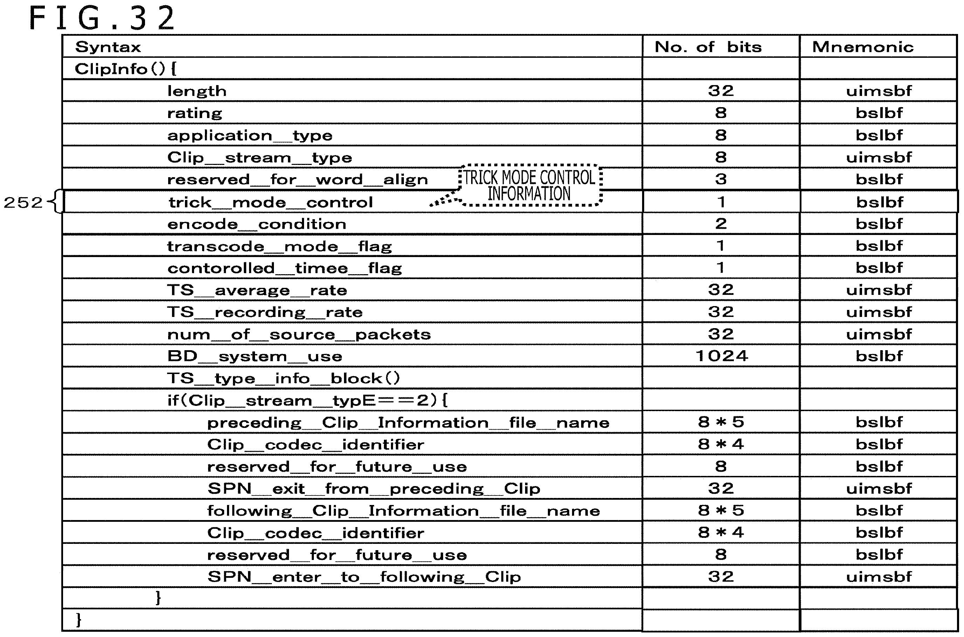

   FIG. 32 is a diagram describing an example of the process of recording the usage rules information in the clip information file.
[FIG. 33]

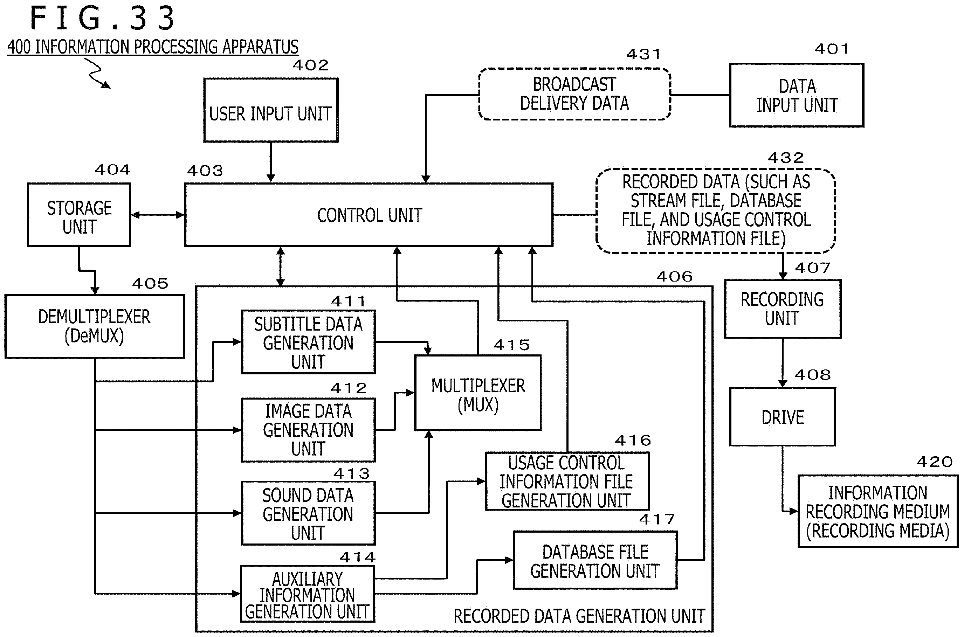

   FIG. 33 is a diagram describing a configuration example of an information processing apparatus that executes a process of recording data in an information recording medium (media).
[FIG. 34]

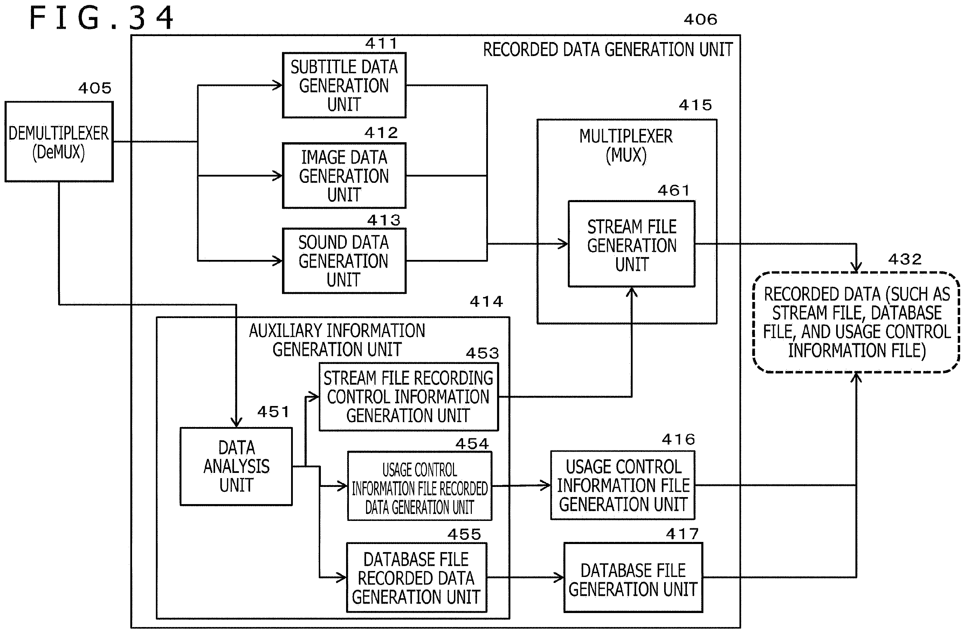

   FIG. 34 is a diagram describing a configuration example of the information processing apparatus that executes the process of recording data in the information recording medium (media).
[FIG. 35]

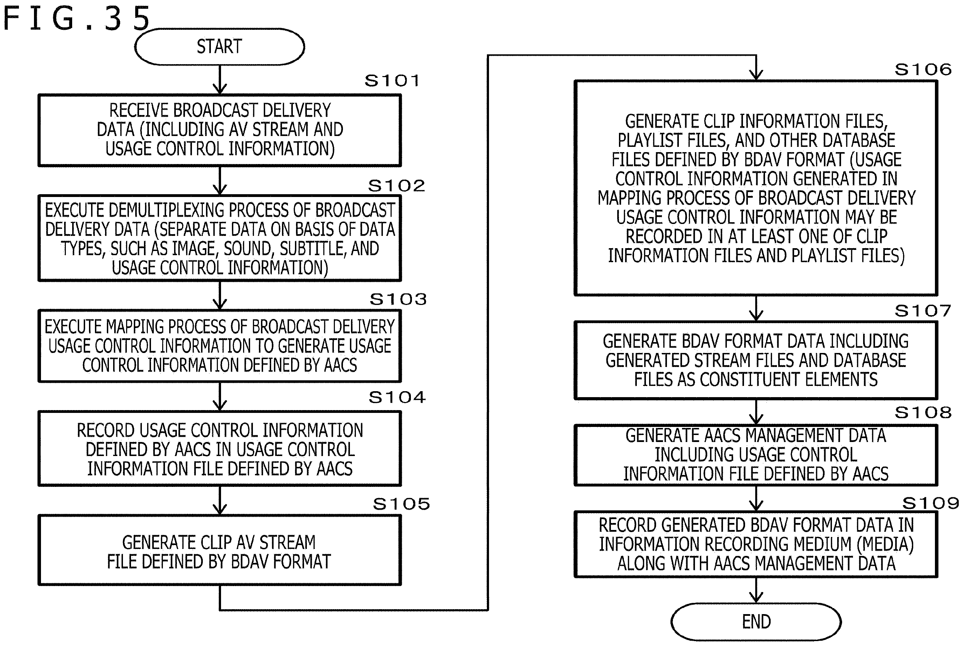

   FIG. 35 is a diagram illustrating a flow chart describing a process sequence of the process of recording data in the information recording medium (media).
[FIG. 36]

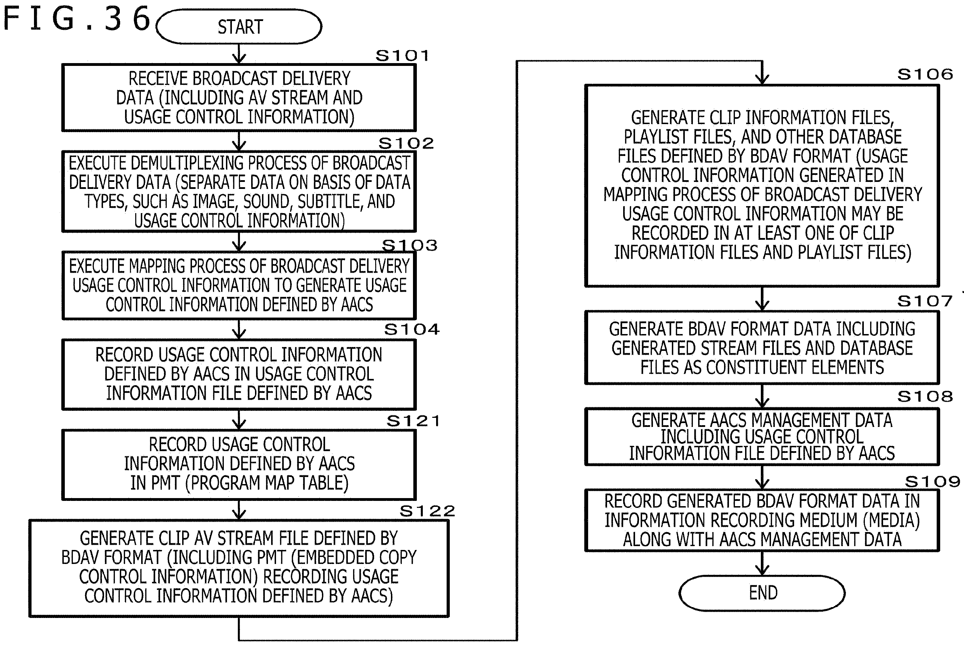

   FIG. 36 is a diagram illustrating a flow chart describing a process sequence of the process of recording data in the information recording medium (media).
[FIG. 37]

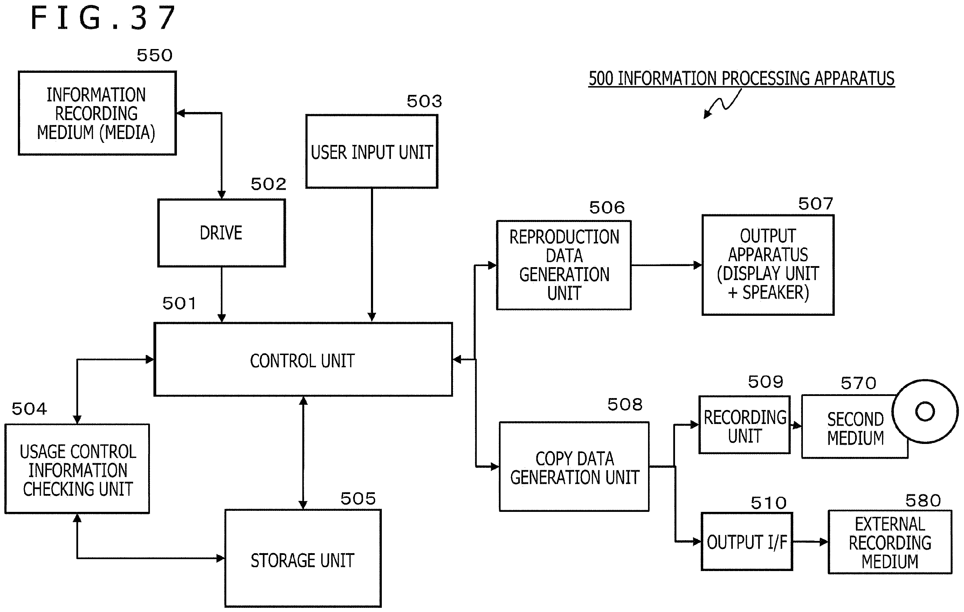

   FIG. 37 is a diagram describing a configuration example of an information processing apparatus that executes a reproduction or copying process of recorded data of an information recording medium (media).
[FIG. 38]

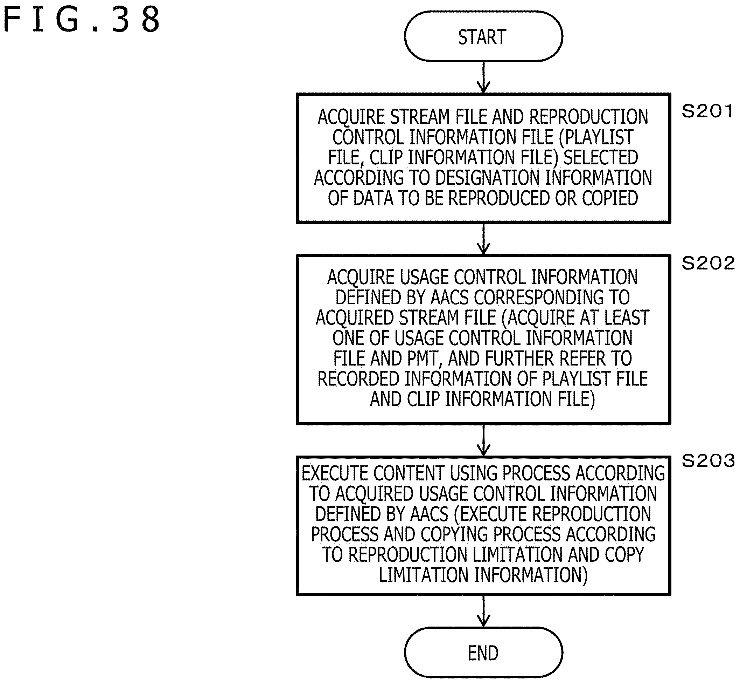

   FIG. 38 is a diagram illustrating a flow chart describing a sequence of a process executed by the information processing apparatus that executes the reproduction or copying process of the recorded data of the information recording medium (media).
[FIG. 39]

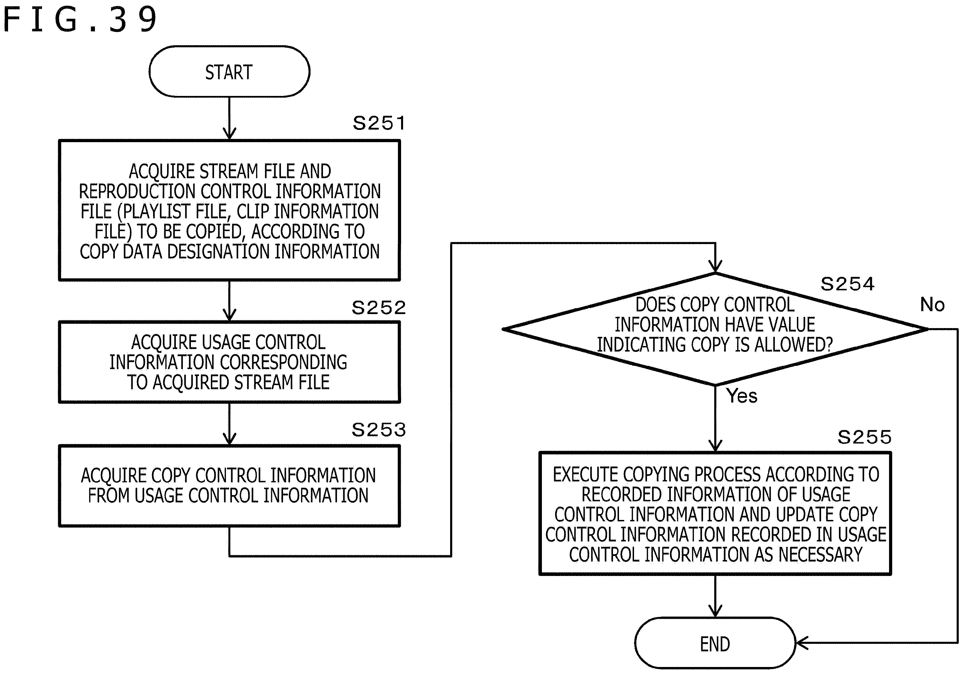

   FIG. 39 is a diagram illustrating a flow chart describing a process sequence of a data copying process between information recording media (media).
[FIG. 40]

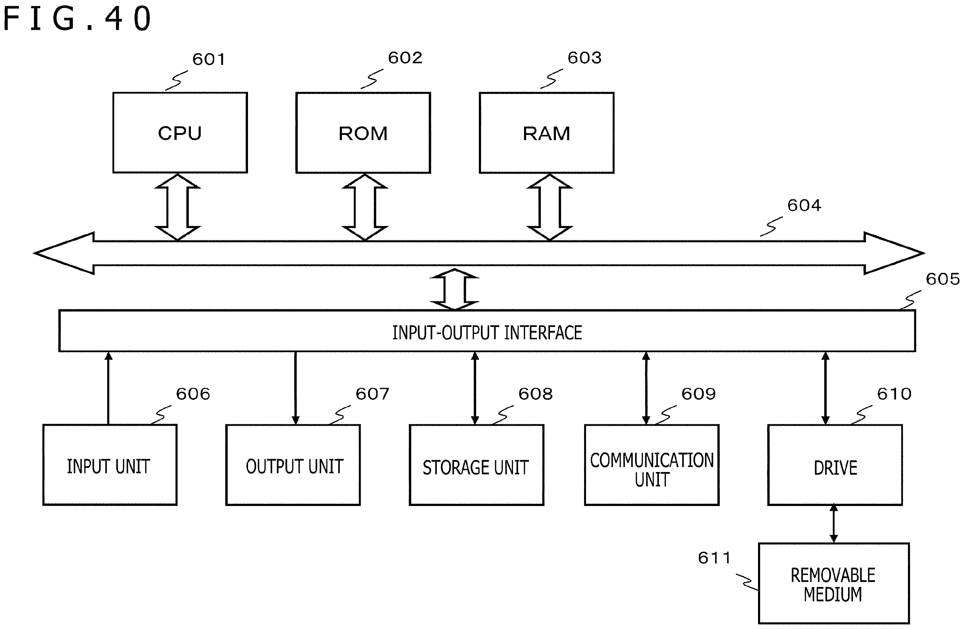

   FIG. 40 is a diagram describing a hardware configuration example of an information processing apparatus applied to the process of the present disclosure.

### [Description of Embodiment]

Hereinafter, details of an information processing apparatus, an information recording medium, an information processing method, and a program of the disclosure will be described with reference to the drawings. Note that the details will be described according to the following items.
1. Configuration Example of Communication System and Copying Process Example
2. Delivery Example of Broadcast Content and Copy Control Information from Broadcasting Station
3. Formats in Case of Recording Received Data from Broadcasting Station in Information Recording Medium (Media)
4. Usage Control Process of Data Recorded in Information Recording Medium (Media)
5. Conversion of Usage Rules Information Including Copy Control Information and Recording Process in Recording Delivery Content of Broadcasting Station in Information Recording Medium
6. Recording Configuration Example of Embedded Copy Control Information
7. Configuration Example of Recording Trick Mode Control Information in Reproduction Control Information File
8. Configuration and Process of Information Processing Apparatus That Executes Process of Recording Data in Information Recording Medium
9. Configuration and Process of Information Processing Apparatus That Executes Reproduction and Copying Process of Data Recorded in Information Recording Medium
10. Configuration Example of Information Processing Apparatus
11. Conclusion of Configuration of Present Disclosure

### [1. Configuration Example of Communication System and Copying Process Example]

First, a configuration example of a communication system as one of usage configuration examples of the information processing apparatus that executes the process of the present disclosure and a copying process example of content will be described with reference to FIG. 1 and the following drawings.

Media, such as a BD (Blu-ray (registered trademark) Disc), a flash memory, and a hard disk (HDD), are installed on an information processing apparatus 30 illustrated in FIG. 1. The information processing apparatus 30 executes processes of recording data in the installed media, processes of reproducing data from the installed media, processes of copying data to other media, and the like.

The data recorded in the media by the information processing apparatus 30 is, for example, transmitted content provided by a transmission apparatus 20, such as a broadcasting station (broadcasting server) 21 and a data delivery server 22. Specifically, the content is a broadcast program or the like provided by a television station.

The transmitted content is transmitted from the transmission apparatus 20 to the information processing apparatus 30 through a broadcast wave or a network, such as the Internet.

The information processing apparatus 30 is, for example, a recording and reproducing apparatus 31, a television 32, a PC 33, a portable terminal 34, or the like. Various media, such as a BD (Blu-ray (registered trademark) Disc) 41, an HDD (hard disk) 42, and a flash memory 43, are installed on the information processing apparatuses. The information processing apparatuses execute processes of recording data in the media, processes of reproducing data from the media, processes of copying data between the media, and the like.

The data transmission from the transmission apparatus 20 to the information processing apparatus 30 is executed according to, for example, an MPEG-2TS format.

The MPEG-2TS format defines a data transfer system (transport format) in transmitting encoded data as content configuration data, such as images (Video), sound (Audio), and subtitles (Subtitle), through a broadcast wave or a network.

As described above, the data delivery system using the MMT (MPEG Media Transport) format as a broadcast format of 4K and 8K images is examined in Japan. The data delivery system using the conventional MPEG-2TS format as a broadcast format of the 4K and 8K images is examined in many countries in Europe.

The transmission apparatus 20 encodes the content data and generates a data file including the encoded data and metadata of the encoded data. The transmission apparatus 20 stores the generated encoded data in packets defined by each format and transmits the packets through a broadcast wave or a network.

The data provided by the transmission apparatus 20 to the information processing apparatus 30 includes the data to be reproduced, such as images, sound, and subtitles, as well as guidance information or notification information, such as a program guide, and control information including various types of management information, such as a control message.

Various media, such as the BD (Blu-ray (registered trademark) Disc) 41, the HDD (hard disk) 42, and the flash memory 43, are installed on the information processing apparatus 30, such as, for example, the recording and reproducing apparatus 31, the television 32, the PC 33, and the portable terminal 34, illustrated in FIG. 1. The information processing apparatus 30 executes processes of recording data in the media, processes of reproducing data from the media, processes of copying data between the media, and the like.

A specific example of a process of recording delivery data from the broadcasting station 21 or the like in a recording medium, such as a BD, and copying the recorded data to another medium will be described with reference to FIG. 2.

FIG. 2 illustrates the following two processes.
(A) Copying and recording of broadcast reception data
(B) Second generation copy

(A) Copying and recording of broadcast reception data is a process of inputting data received from a transmission apparatus, such as a broadcasting station, to a recording and reproducing apparatus 61 to record copy data of broadcast content in a medium A 62.

The medium A 62 is, for example, a recording medium, such as a BD, a hard disk, and a flash memory.

The recording and reproducing apparatus 61 can copy the recorded data of the medium A 62 to another medium.

The copying process can generate a medium B1 63, a medium B2 64, and the like that are media recording second generation copy data as illustrated in FIG. 2(B).

Furthermore, the recording and reproducing apparatus 61 or another recording and reproducing apparatus can further copy the second generation copy data recorded in the medium B1 63, the medium B2 64, and the like to other media.

However, as described above, much of the broadcast content is content protected by copyright, and various types of copy control information are set on the basis of content, such as programs.

For example, various types of copy control information are set on the basis of content (programs), such as copy-allowed content, copy-prohibited content, and content in which the number of times or pieces of copies allowed is set.

The copy control information regarding the broadcast content is transmitted through a broadcast wave along with the program content and is provided to the reception apparatus on the user side, that is, the recording and reproducing apparatus 61 in the setting illustrated in FIG. 2.

The recording and reproducing apparatus 61 illustrated in FIG. 2 executes a copying process according to the copy control information received from the broadcasting station in conjunction with the broadcast content. However, currently, the control target of the copy control information received from the broadcasting station is only the copying process for the content received by the recording and reproducing apparatus 61 from the broadcasting station. That is, for example, only the copying and recording of the broadcast content for the medium A 62 illustrated in FIG. 2(A) is controlled.

At present, as for much of 4K broadcast content, copying of the content recorded in the medium A 62 to other media, such as the media B1 and B2 illustrated in FIG. 2, is not allowed. The main reason for this is that there is no provision for applying the copy control information of the 4K content delivered by the broadcasting station in copying the content recorded in the medium A 62 to another medium.

The present disclosure is made in view of, for example, the problem, and the present disclosure enables performance of copy control inheriting the copy control information set in the original broadcast content in a case of recording the broadcast content, such as 4K images, delivered by the broadcasting station or the like in the information recording medium, such as a hard disk and a BD (Blu-ray (registered trademark) Disc), to use the broadcast content.

### [2. Delivery Example of Broadcast Content and Copy Control Information from Broadcasting Station]

Next, a delivery example of broadcast content and copy control information from the broadcasting station will be described with reference to FIG. 3 and the following drawings.

Note that, although the process of the present disclosure can be used in various content delivery formats, an example of a case of using a delivery system of broadcast content according to the MPEG-2TS format to be adopted as a delivery format of 4K images and 8K images in many countries in Europe will be described as an example in the following embodiment.

FIG. 3 is a diagram illustrating a delivery configuration example of broadcast content or the like from the transmission apparatus 20, such as the broadcasting station 21, to the information processing apparatus 30, such as the recording and reproducing apparatus 31 and the television 32, as a reception apparatus on the user side.

The transmission apparatus 20 stores data, such as images and sound, included in the broadcast content (program) that is what is called a broadcast program in TS packets defined by the MPEG-2TS format and delivers the TS packets to the information processing apparatus (receiver) 30.

Furthermore, the transmission apparatus 20 delivers usage rules information (URI) corresponding to the delivery content to the information processing apparatus (receiver) 30.

Note that the usage rules information (URI) includes copy control information.

The delivery system of the usage rules information (URI) is not defined, and each country and each broadcasting station can use various systems. However, in many cases, it is likely that a system of storing the usage rules information (URI) in TS packets defined by the MPEG-2TS format to transmit the usage rules information (URI) is used as in the system for the data, such as images and sound, included in the broadcast content (program).

The MPEG-2TS format will be described with reference to FIG. 4.

The MPEG-2TS format is a format defining a data storage format (container format) of encoded data and the like in storing encoded data that is content configuration data, such as images (Video), sound (Audio), and subtitles (Subtitle), and management information (PSI/SI) in a recording medium (media) or in transmitting the data and the information through a broadcast wave or a network.

The MPEG-2TS format is a format standardized in ISO 13818-1 and is used not only for a delivery format of digital broadcasting, but also for, for example, recording data in a BD (Blu-ray (registered trademark) Disc).

FIGS. 4(a) to 4(c) are diagrams illustrating a configuration of the MPEG-2TS format data.

FIG. 4(a) illustrated in the lowest stage is a diagram illustrating an overall configuration of the format data of MPEG-2TS.

As illustrated in FIG. 4(a), the MPEG-2TS format data includes a plurality of elementary streams (Elementary stream).

The elementary stream (Elementary stream) is a unit set as one unit of, for example, images, sound, subtitles, and the like.

One elementary stream (Elementary stream) includes one or a plurality of PES (Packetized Elementary stream) packets as illustrated in FIG. 4(b).

Specifically, one elementary stream (Elementary stream) includes one or a plurality of PES packets of payload type (Payload_type) = 0×0 including the same packet identifier (Packet_id).

One PES packet includes one or a plurality of TS (transport stream) packets as illustrated in FIG. 4(c).

Specifically, one PES packet includes one or a plurality of TS packets of payload type (Payload_type) = 0×0 including the same packet identifier (Packet _id).

Unlike the MMTP packet described above, the length of the TS packet is fixed, and the packet size of one TS packet is fixed to 188 bytes.

Next, a specific data configuration example of the usage rules information (URI) corresponding to the delivery content will be described with reference to FIGS. 5 and 6. An example of the standard for the usage rules information (URI) including the copy control information to be adopted in a plurality of countries in Europe includes CI+ (CI Plus).

FIG. 5 is a diagram describing an overview of the usage rules information (URI) of CI+ (CI Plus) as one of the standards for the usage rules information (URI).

The usage rules information (URI) defined by CI+ (CI Plus) is data associated with a program identifier (MPEG2 program number) of 16 bits as described in the field of (2) correspondence with content (program) in FIG. 5. That is, the usage rules information including copy control information is defined on the basis of programs.

In addition, as described in the field of (3) system of delivery from broadcasting station to receiver in FIG. 5, the system of delivery to the receiver depends on the broadcasting station, and various systems are planned to be used.

As described above, the 4K images and the 8K images are to be delivered according to the MPEG-2TS format in many countries in Europe, and the delivery mode and the data content of the usage rules information (URI) including the copy control information corresponding to the delivery content can be freely specified in each country or broadcasting station.

Next, specific data (control information), such as copy control information, included in the usage rules information (URI) according to the CI+ (CI Plus) provision will be described with reference to FIG. 6.

CI+ (CI Plus) includes, for example, the following pieces of data as illustrated in FIG. 6.
(1) Analog output content protection information (aps_control_info)
(2) Content encryption control information (emi_copy_control_info)
(3) Output image control information (ict_copy_control_info)
(4) Content redistribution control information (rct_copy_control_info)
(5) Digital only output control information (dot_copy_control_info)
(6) Copy retention limit control information (rl_copy_control_info)
(7) Trick mode control information (trick_mode_control_info)

(1) Analog output content protection information (aps_control_info) is protection information regarding analog output content. Note that aps = Analog Protection System. The following analog output content protection information corresponding to bit value (2 bits) setting can be recorded.
   00 = Analog output content not protected
   (01/10/11) = Analog output content protected (different protection modes corresponding to bit values are defined)
(2) Content encryption control information (emi_copy_control_info) is encryption control information regarding content. Note that emi = Encryption Mode Indicator. The following encryption control information regarding content corresponding to bit value (2 bits) setting can be recorded.
   00 = No copy limitation (Copy Free)
   01 = No more copy allowed (No More Copy)
   10 = Copy of only one generation permitted (Copy Once)
   11 = Copy not allowed (Copy Never)
(3) Output image control information (ict_copy_control_info) is control information regarding output image. Note that ict = Image Constrained trigger or Image Constraint Token. A rule regarding resolution limitation during analog output is defined. The following rules regarding resolution limitation during analog output corresponding to bit value (1 bit) setting can be recorded.
   0 = Output image not limited
   1 = Output image limited (resolution limited)
(4) Content redistribution control information (rct_copy_control_info) is redistribution limitation presence/absence information of copy free content. (4) Content redistribution control information (rct_copy_control_info) is applied in the case of (2) encryption mode information (emi_copy_control_info) = 00 (no copy limitation). Note that rct = Redistribution Control token. The following redistribution limitation presence/absence information of copy free content corresponding to bit value (1 bit) setting can be recorded.
   0 = Content redistribution not limited
   1 = Content redistribution limited
(5) Digital only output control information (dot_copy_control_info) is a flag indicating whether or not to prohibit analog output. Note that dot = Digital Only Token. The following digital only output limitation information corresponding to bit value (1 bit) setting can be recorded.
   0 = Output data not limited to only digital data (analog output possible)
   1 = Output data limited to only digital data (analog output prohibited)

Information of whether or not to allow copy data reproduction (time shift reproduction) of copy-prohibited content within a certain time period and allowed time period are recorded in (6) copy retention limit control information (rl_copy_control_info). Note that rl = retention limit. The permission/no-permission information of the time shift reproduction and the allowed time shift time in the case where the time shift reproduction is permitted can be checked according to bit value (8 bits) setting. Note that the default time shift allowed time (retention limit) is 90 minutes.

Reproduction limitation information of special reproduction (trick play) of content, such as fast-forward reproduction, slow reproduction, and skip reproduction, is recorded in (7) trick mode control information (trick_mode_control_info). Bit value (1 bit) setting (0/1) indicates whether or not there is a trick mode reproduction limitation.

In this way, various types of control information regarding the usage of content and the copying process are defined by CI+ (CI Plus) that is a standard for the usage rules information (URI) including the copy control information to be adopted in a plurality of countries in Europe.

As described above with reference to the item (2) of the table in the lower part of FIG. 5, the usage rules information (URI) is data associated with the program identifier (MPEG2 program number) of 16 bits. That is, the usage rules information including the copy control information is defined on the basis of programs.

As described above with reference to the item (3) of the table in the lower part of FIG. 5, the system of delivery from the broadcasting station to the receiver depends on the broadcasting station, and various systems are planned to be used.

An example of a transmission method that can be used in the case of transmitting the usage rules information (URI) from the broadcasting station will be described with reference to FIG. 7 and the following drawings.

FIG. 7 illustrates a TS packet sequence transmitted by the broadcasting station 21. The content data, such as images, sound, and subtitles, included in the broadcast program and various types of control information are stored in each TS packet. Table information representing the relationship with elements of the program (program), such as images and sound streams, is also stored in the TS packets.

The table information is called PSI (Program Specific Information) and includes a plurality of tables, such as PAT (Program Association Table) and a PMT (Program Map Table (program map table)). These are tables defined by the MPEG-2TS format. The PID of the PMT corresponding to the program (program) identifier and the like are described in the PAT.

Various types of control information regarding a program (program) are recorded in the PMT. The TS packets storing the PMTs are arranged at certain intervals of TS packets (for example, at 100 msec intervals), and the reproduction data of a following TS packet needs to be used according to the usage rules information recorded in a preceding PMT.

In the TS packet sequence illustrated in FIG. 7, a TS packet provided with a packet identifier PID=0×00 is a PAT storage packet. The information processing apparatus 30 as a reception apparatus on the user side first acquires the PAT from the TS packet provided with the packet identifier PID=0×00, acquires the packet identifier (PID) of the PMT storage TS packet from the PAT, and selects the TS packet provided with the acquired PID to take out the PMT (program map table) from the TS packet.

Various types of control information regarding program (program) can be recorded in the PMT (program map table). For example, various types of control information can be recorded in a descriptor (descriptor) recording area set in the PMT.

The broadcasting station 21 can also record, in the descriptor (descriptor) recording area of the PMT, the usage rules information (URI) recording the copy control information on the basis of programs (programs) to transmit the usage rules information (URI) to the information processing apparatus 30 as a receiver on the user side.

FIG. 8 is a diagram illustrating a data configuration example (syntax (Syntax)) in the case where the usage rules information (URI) including the copy control information is recorded in the descriptor (descriptor) recording area of the PMT (program map table).

Note that the number of bits (No. of bits) and data notation (Mnemonic) are illustrated in conjunction with the data configuration (Syntax). In the data notation, "uimsbf" denotes a notation of "unsigned integer, most significant bit first" (unsigned integer most significant bit first). Note that an example of other data notations includes "bslbf" = "bit string, left bit first" (bit string, left bit first).

As illustrated in FIG. 8, a descriptor tag (descriptor tag) and a descriptor length (descriptor length) are first recorded in the descriptor (descriptor) recording area of the PMT (program map table). Furthermore, data (uri_message) indicating the usage rules information (URI) start position is recorded, and then the following data of the copy control information included in the usage rules information (URI) according to the CI+ (CI Plus) provision described above with reference to FIG. 6 is recorded.
(1) Analog output content protection information (aps_control_info)
(2) Content encryption control information (emi_copy_control_info)
(3) Output image control information (ict_copy_control_info)
(4) Content redistribution control information (rct_copy_contrtol_info)
(5) Digital only output control information (dot_copy_control_info)
(6) Copy retention limit control information (rl_copy_control_info)
(7) Trick mode control information (trick_mode_control_info)

The example described with reference to FIGS. 7 and 8 is an example of recording, in the descriptor (descriptor) of the PMT (program map table), the copy control information included in the usage rules information (URI) according to the CI+ (CI Plus) provision to transmit the copy control information.

Other methods can be used as a method of transmitting the usage rules information (URI) from the broadcasting station to the reception apparatus. Another example of the transmission method will be described with reference to FIGS. 9 and 10.

FIG. 9 is a diagram illustrating a TS packet sequence transmitted by the broadcasting station 21 as in FIG. 7. The example illustrated in FIG. 9 is an example of recording the control information, such as copy control information, included in the usage rules information (URI) according to the CI+ (CI Plus) provision in one TS packet to transmit the control information, instead of the configuration of recording the usage rules information (URI) in the PMT (program map table) described with reference to FIGS. 7 and 8.

One packet in the TS packet sequence illustrated in FIG. 9 is a TS packet recording the control information included in the usage rules information (URI) according to the CI+ (CI Plus) provision.

A specific packet identifier (PID) is recorded in a TS header of the TS packet. The PID allows to determine that the packet is a TS packet storing the usage rules information (URI).

The TS packet includes the TS header and a TS payload. The usage rules information (URI) according to the CI+ (CI Plus) provision is recorded as the TS payload of the TS packet. Note that as described above, the packet size of one TS packet is fixed to 188 bytes, and the packet size needs to be adjusted to 188 bytes. The packet size is adjusted by executing a process of, for example, recording dummy data (0000...) or the like in an adaptation field (Adaptation field).

FIG. 10 is a diagram illustrating a data configuration example (syntax (Syntax)) in the case of recording, in one TS packet, the control information, such as copy control information, included in the usage rules information (URI) according to the CI+ (CI Plus) provision.

As illustrated in FIG. 10, data (uri_message) indicating the usage rules information (URI) start position is recorded, and then the following pieces of data included in the usage rules information (URI) according to the CI+ (CI Plus) provision described above with reference to FIG. 6 is recorded.
(1) Analog output content protection information (aps_control_info)
(2) Content encryption control information (emi_copy_control_info)
(3) Output image control information (ict_copy_control_info)
(4) Content redistribution control information (rct_copy_control_info)
(5) Digital only output control information (dot_copy_control_info)
(6) Copy retention limit control information (rl_copy_control_info)
(7) Trick mode control information (trick_mode_control_info)

The broadcasting station 21 can, for example, store the usage rules information (URI) according to the CI+ (CI Plus) provision as the descriptor of the PMT (program map table) as described with reference to FIGS. 7 and 8 or in one TS packet as described with reference to FIGS. 9 and 10 to transmit the usage rules information (URI) to the information processing apparatus 30 as a reception apparatus on the user side.

The information processing apparatus 30 as a reception apparatus on the user side refers to the usage rules information (URI) received from the broadcasting station to perform usage control, such as copy control, of the received content.

However, assuming that the received content is recorded in an information recording medium (media), such as a BD and an HDD, and used, the usage control of the content recorded in the medium, that is, usage control according to the usage rules information (URI) intended by the broadcasting station, cannot be performed unless the usage rules information (URI) received from the broadcasting station or inherited information of the usage rules information (URI) is recorded in conjunction with the medium of the recording place of the content.

### [3. Formats in Case of Recording Received Data from Broadcasting Station in Information Recording Medium (Media)]

Next, a BDAV format and an SPAV format that are recorded data formats in a case of recording the delivery content delivered from the broadcasting station or the like in a medium, such as, for example, a BD (Blu-ray (registered trademark) Disc), a flash memory, and an HDD (hard disk), to reproduce the delivery content will be described with reference to FIG. 11 and the following drawings.

For example, in a case of reproducing the content, such as images, sound, and subtitles, from a medium, such as a BD (Blu-ray (registered trademark) Disc), a flash memory, and an HDD, reproduction control information and index information for executing the reproduction process of the content are necessary. The reproduction control information and the index information are generally called database files.

The reproduction control information and the index information vary according to the reproduction application that executes the reproduction process of the recorded data of the medium.

Examples of current recording and reproducing application standards (= data recording formats) include BDMV and BDAV standards (data recording formats). The application standards are established as data recording and reproducing application standards mainly using the BD (Blu-ray (registered trademark) Disc).

Note that the BDMV and the BDAV are application standards of data recording and reproduction mainly using the BD and are data recording formats (standards). However, the standards can be applied not only to the BD, but also to the data recording and reproduction using media, such as a flash memory, other than the BD.

The BDMV is an application standard developed for a BD-ROM in which, for example, movie content or the like is recorded in advance, and the BDMV is mainly widely used in a non-rewritable BD-ROM of package content or the like.

On the other hand, the BDAV is a standard developed to be applied to a data recording and reproducing process mainly using a rewritable BD-RE disk, a BD-R disk that allows recording only once, or the like. The BDAV is used to record and reproduce, for example, a video taken by the user using a video camera or the like or to record and reproduce television broadcast.

To use a reproduction application corresponding to the BDAV format to execute the reproduction process of content from a medium, data needs to be recorded according to the BDAV format.

As described above, the BDAV format defines playlist files, clip information files, and the like as recording files of the reproduction control information, and the reproduction application corresponding to BDAV uses the recorded information of the reproduction control information files (database files) to execute the data reproduction process.

FIG. 11 is a diagram illustrating a directory configuration example of data recorded in an information recording medium (media) 40 according to the BDAV format.

Various storage files of management information, reproduction control information, and data to be reproduced are set in the directory as illustrated in FIG. 11.

Management information files include, for example, an info file (info), menu files (menu), mark files (mark), and the like illustrated in FIG. 11. Management information and the like of the titles to be displayed to the user are mainly stored in the files.

In addition, for example, files including
playlist files (playlist) and
clip information files (clipinf)
are recorded as reproduction control information files.

Furthermore, clip AV stream files (stream) are recorded as reproduction data storage files.

The playlist file is a file defining a reproduction order or the like of the content according to program information of the reproduction program designated by the title, and the playlist file includes, for example, designation information or the like of a clip information file recording reproduction position information or the like.

The clip information file is a file designated by the playlist file and includes reproduction position information or the like of a clip AV stream file.

The clip AV stream file is a file storing AV stream data to be reproduced and management information. The clip AV stream file includes packets storing data to be reproduced, such as images, sound, and subtitles, and management information.

Note that an example of management information defined by the MPEG-2TS format and recorded in the clip AV stream file includes PSI/SI (Program Specific Information/Service Information).

The data files including the management information files, the playlist files, and the clip information files are storage files of the management information to be applied to the reproduction process of the images, the sound, the subtitles, and the like that are reproduction data stored in the clip AV stream files. These are files storing reproduction control information, attribute information of reproduction data, and the like, and the files are called database files.

The sequence of reproducing the content recorded in the information recording medium is as follows.
(a) First, the reproduction application designates a specific title from the management information file.
(b) The playlist associated with the designated title is selected.
(c) The clip information defined in the selected playlist is used to read an AV stream or a command as content real data to reproduce the AV stream or execute an execution process of the command.

FIG. 12 is a diagram describing a correspondence between the following pieces of data including
the playlist files,
the clip information files, and
the clip AV stream files
recorded in the information recording medium (media) 40.

The AV streams including the data to be reproduced, such as images, sound, and subtitles, that is the actual data to be reproduced are recorded as clip AV stream (Clip AV Stream) files, and furthermore, the playlist (PlayList) files and the clip information (Clip Information) files are defined as the management information and reproduction control information files of the AV streams.

The files of the plurality of categories can be sorted into two layers including
a playlist layer including the playlist (PlayList) files and
a clip layer including the clip AV stream (Clip AV Stream) files and the clip information (Clip Information) files
as illustrated in FIG. 12.

Note that one clip AV stream (Clip AV Stream) file is associated with one clip information (Clip Information) file. The pair will be considered as one object, and the files will be collectively referred to as a clip (Clip) or a clip file.

Management information including detail information of the data included in the clip AV stream, such as, for example, an EP map recording I picture position information or the like of MPEG data, is recorded in the clip information file.

Note that the clip AV stream (Clip AV Stream) file includes TS packets in a case where the data is MPEG-2TS format data.

In addition, the clip AV stream (Clip AV Stream) file includes MMTP packets in a case where the data is MMT format data.

The clip information (Clip Information) file stores management information for acquiring the reproduction start position or the like of the storage data of the clip AV stream file, such as, for example, corresponding data of the data position of byte string data of the clip AV stream file and the reproduction time position including an "entry point (EP)" that is a reproduction start point in a case where the data is expanded on the time axis.

The playlist includes information using a time stamp that is information on the time axis to indicate the access point corresponding to the reproduction start position or the reproduction end position of the clip (Clip).

For example, the clip information file can be referenced based on the time stamp indicating the position after the reproduction time from the start point of the content to acquire the data reading position of the clip AV stream file, that is, the address of the reproduction start point.

The clip information file (Clip Information file) is used to find, based on the time stamp, address information for starting to decode the stream in the clip AV stream file.

In this way, the playlist (PlayList) file includes designation information of the reproduction section for the reproducible data included in the clip (= clip information file + clip AV stream file) layer.

One or more play items (PlayItem) are set in the playlist (PlayList) file, and each play item includes the designation information of the reproduction section for the reproducible data included in the clip (= clip information file + clip AV stream file) layer.

Note that the clip AV stream (Clip AV Stream) file storing the data to be reproduced includes TS packets in the case where the data is the conventional MPEG-2TS format data as described above.

The TS packets are the TS packet sequence according to the MPEG-2TS format described above with reference to FIG. 4.

Note that there is an SPAV format that is a format similar to the BDAV format. As described above, the BDMV and the BDAV are application standards of the data recording and reproduction mainly using the BD. On the other hand, the SPAV format is an application standard of the data recording and reproduction mainly for the hard disk.

However, both the BDAV format and the SPAV format are formats that can be used for recording and reproduction using various media, such as a BD, a flash memory, and an HDD.

The data recording and reproduction of the SPAV format data can be executed by a process similar to the data recording and reproducing process in the BDAV format. However, the file name setting of the SPAV format is partially different from the file name setting of the BDAV format.

FIG. 13 illustrates a directory configuration example of the SPAV format.

Various storage files of management information, reproduction control information, and data to be reproduced are set in the directory of the SPAV format illustrated in FIG. 13 as in the BDAV format described above with reference to FIG. 2.

The management information files include, for example, an info file (INFO), menu files (MENU), mark files (MARK), and the like illustrated in FIG. 13. Management information and the like of the titles to be displayed to the user are mainly stored in the files.

In addition, for example, files including
playlist files (PLAYLIST) and
clip information files (CLIPINF)
are recorded as reproduction control information files.

Furthermore, clip AV stream files (STREAM) are recorded as reproduction data storage files.

As illustrated in FIG. 13, the setting of the directory names and the extensions of files in the SPAV format are different from the BDAV format described with reference to FIG. 11.

However, the data stored in each file and the role of each file are similar to the BDAV format.

### [4. Usage Control Process of Data Recorded in Information Recording Medium (Media)]

Next, a usage control process of the data stored in the information recording medium (media) will be described.

The copy control and the usage control of the content recorded in the information recording medium (media), such as a BD and an HDD, according to the BDAV format or the SPAV format are performed according to the AACS (Advanced Access Content System) provision.

However, the broadcast content is not restricted by the AACS provision, and the AACS provision does not have to be followed. In many cases, original usage rules information not related to the AACS provision is defined to deliver the content. That is, original usage rules information, such as CI+ (CI Plus) described above, is used.

Therefore, to record the broadcast content in the information recording medium (media), such as a BD and an HDD, and perform the usage control of the recorded data according to information inheriting the usage rules information defined by CI+ (CI Plus) received in conjunction with the broadcast content, the received usage rules information defined by CI+ (CI Plus) needs to be converted into usage rules information defined by AACS to record the information in the information recording medium (media).

In this way, the information processing apparatus that receives the broadcast content and records the data in the information recording medium (media) needs to execute a process of converting the usage rules information including the copy control information received from the broadcasting station in conjunction with the broadcast content into the usage rules information defined by AACS to record the information, that is, a process of executing a mapping process of two pieces of usage rules information of different standards to generate data (usage rules information defined by AACS) obtained as a result of mapping and to record the data in the information recording medium.

Details of the mapping process will be described in a later stage. First, the usage rules information defined by AACS will be described.

The AACS provision includes two types of provisions AACS 1 and AACS 2.

AACS 2 is a provision newly established to correspond to high quality content, such as 4K content, based on the conventional AACS 1 provision.

FIG. 14 is a diagram illustrating a data example of the usage rules information, such as copy control information, defined by AACS 2. As illustrated in FIG. 14, the following control information is defined by AACS 2.
(1) EPN (1 bit): output data encryption necessity information during copying process
(2) CCI (2 bits): copy control information
(3) Standard_Digital_Output_Flag (1 bit): digital output allowance standard information
(4) Move_Not_Allowed (1 bit): moving process allowance information
(5) Trusted_Source_Mark_Screening_Required (1 bit): source checking process (digital watermark (Watermark) detection process) necessity information

(1) EPN is output data encryption necessity information during copying process. The following output data encryption necessity information during copying process corresponding to bit value (1 bit) setting can be recorded.
   0 = Encryption of copy output data necessary (EPN-asserted)
   1 = Encryption of copy output data not necessary (EPN-unasserted)
(2) CCI (copy control information) is allowance information of the copying process. The following copy control information corresponding to bit value (2 bits) setting can be recorded
   00 = No copy limitation (Copy Control Not Asserted)
   01 = No more copy allowed (No More Copy)
   10 = Copy of only one generation allowed (Copy One Generation)
   11 = Copy not allowed (Never Copy)
(3) Standard_Digital_Output_Flag is digital output allowance standard information. The following digital output allowance standard corresponding to bit value (1 bit) setting can be recorded.
   0 = Can be output to only new protection technique (for example, HDCP 2.2)
   1 = Can be output to both of new and old protection techniques (for example, HDCP 2.2 and HDCP 1.4)
   Note that HDCP 2.2 is a standard corresponding to processing of UHD (Ultra High Definition) images, such as 4K images, that is, a copyright protection standard regarding digital data output using HDMI (registered trademark) or the like that outputs digital data.
(4) Move_Not_Allowed is moving process allowance information. Allowance presence/absence information of a moving process can be recorded according to bit value (1 bit) setting.
(5) Trusted_Source_Mark_Screening_Required is information defining whether or not a source checking process (digital watermark (Watermark) detection process) is necessary in outputting the content. Necessity information of the source checking process can be recorded according to bit value (1 bit) setting.

On the other hand, FIG. 15 is a diagram illustrating an example of the usage rules information defined by conventional AACS 1. As illustrated in FIG. 15, the following usage rules information is defined by AACS 1.
(1) EPN (1 bit): output data encryption necessity information during copying process
(2) CCI (2 bits): copy control information
(3) Move_Not_Allowed (1 bit): moving process allowance information
(4) Trusted _Source _Mark _Screening _Required (1 bit): source checking process (digital watermark (Watermark) detection process) necessity information
(5) Image_Constraint_Token (1 bit): output image control information
(6) Digital_Only_Token (1 bit): digital only output control information
(7) APSTB (Analog Protection System Trigger Bit (3 bits): protection rule of analog output content

The data of (1) to (4) in (1) to (7) includes provisions similar to the provisions of AACS 2.
(5) Image_Constraint_Token is output image control information. A rule regarding resolution limitation during analog output is recorded. The following output image control information corresponding to bit value (1 bit) setting can be recorded.
   0 = Output image limited (resolution limited)
   1 = Output image not limited (resolution not limited)
(6) Digital_Only_Token is digital only output control information. Information of whether or not to prohibit the analog output is recorded. The following digital only output control information can be recorded according to bit value (1 bit) setting.
   0 = Output data not limited to only digital data (analog output possible)
   1 = Output data limited to only digital data (analog output prohibited)
(7) APSTB is a protection rule of analog output content. Various protection rules of analog output content corresponding to bit value (3 bits) setting are recorded. For example, the following setting is recorded.
   000 = Analog output content not protected
   001 = APS 1 (Analog Protection System 1) on: type 1 (AGC)
   010 = APS 1 (Analog Protection System 1) on: type 2 (AGC + 2L colour stripe)
   011 = APS 1 (Analog Protection System 1) on: type 3 (AGC + 4L colour stripe)

The usage rules information including the copy control information illustrated in FIG. 15 is defined by AACS 1.

The usage control of the data recorded in the information recording medium (media) is executed according to the provision of AACS 2 or AACS 1 described with reference to FIGS. 14 and 15.

For example, the information reproduction apparatus equipped with the information recording medium (media), such as a BD, to reproduce the information needs to be an AACS certified device that can execute the process defined by AACS 1 or AACS 2 (device corresponding to AACS 1 or device corresponding to AACS 2).

The devices corresponding to AACS read the usage rules information according to the AACS provision from the information recording medium (media) and execute a content usage or copying process according to the read usage rules information.

Next, the recording place of the usage rules information defined by AACS will be described with reference to FIG. 16.

FIG. 16 is a diagram illustrating a directory configuration example of the data recorded in the information recording medium (media) 40. The directory illustrated in FIG. 16 is a directory of the BDAV format including the management data of AACS 2. The AACS directory is set in parallel to the BDAV directory described above with reference to FIG. 11, and various types of AACS management data are recorded in the AACS directory.

Note that the AACS management data is also recorded in a higher level for the SPAV directory described above with reference to FIG. 13.

The example of FIG. 16 illustrates the setting including the AACS 2 directory defined by AACS 2, and in a case where the data under the BDAV directory is data defined by AACS 1, an AACS 1 directory is set.

As illustrated in FIG. 16, the directory includes a management information setting section 111 (AACS directory) and a data section 112 (BDAV directory).

A CPS unit key file as an encryption key of data, a usage rules information file (Usage File), and the like are stored in the management information setting section 111 (AACS directory).

On the other hand, for example, files including
an index file,
playlist files,
clip information files, and
clip AV stream files
are recorded under the BDAV directory of the data section 112.

The usage rules information including the copy control information defined by AACS can be recorded in a usage rules information file (Usage File) 121 recorded in the management information setting section 111 (AACS directory) illustrated in FIG. 16. Furthermore, the usage rules information can also be recorded as embedded copy control information (Embedded CCI) 122 in the clip AV stream file of the data section 112. The usage rules information including the copy control information defined by AACS is recorded in at least one of them. The usage rules information can be recorded in both of them.

Note that the CCI of the embedded control information (Embedded CCI) denotes copy control information (Copy Control Information).

The usage rules information file (Usage File) 121 is set on the basis of, for example, one clip information file. For example, in a case where one clip information file is applied to reproduce the content, such as one program, recorded in the information recording medium, the usage rules information corresponding to the content is recorded in one usage rules information file.

The embedded copy control information (Embedded CCI) 122 is recorded in a PMT (Program Map Table (program map table)) stored in the TS packet included in the clip AV stream file. The PMT (Program Map Table (program map table)) is data similar to the PMT in the TS packet delivered by the broadcasting station described above with reference to FIGS. 7 and 8.

The TS packets storing the PMTs are arranged at certain intervals of TS packets (for example, at 100 msec intervals), and the reproduction data of a following TS packet needs to be used according to the usage rules information recorded in a preceding PMT.

### [5. Conversion of Usage Rules Information Including Copy Control Information and Recording Process in Recording Delivery Content of Broadcasting Station in Information Recording Medium]

Next, conversion of the usage rules information including the copy control information and a recording process in recording the delivery content of the broadcasting station in the information recording medium will be described.

As described above, the usage rules information defined by AACS illustrated in FIG. 14 or 15 is not set in the content, such as a program, delivered by the broadcasting station. Usage rules information different from the usage rules information defined by AACS, that is, for example, original usage rules information defined by CI+ (CI Plus) or the like described above with reference to FIGS. 5 and 6, is set in the content, such as a program, delivered by the broadcasting station.

Therefore, the information processing apparatus that receives the broadcast wave to record the data in the information recording medium (media) needs to convert the original usage rules information of the delivery content defined by CI+ (CI Plus) or the like received in conjunction with the broadcast content into usage rules information defined by AACS and record the usage rules information in the information recording medium (media) in the case of recording the broadcast data in the information recording medium (media), such as a BD and an HDD. That is, a mapping process between different standards needs to be applied to the usage rules information including the copy control information to record the usage rules information in the information recording medium (media).

A specific process example will be described with reference to FIG. 17.

FIG. 17 illustrates the information processing apparatus 30 that executes a process of receiving the broadcast content (program) from the transmission apparatus 20, such as a broadcasting station, and recording the broadcast content (program) in the information recording medium (media) 40, such as a BD and an HDD. The information processing apparatus 30 is, for example, an apparatus, such as a recording and reproducing apparatus and a television.

The transmission apparatus 20, such as a broadcasting station, delivers the broadcast content (program) and delivers the usage rules information corresponding to the broadcast content (program). The usage rules information is not the usage rules information defined by AACS described above with reference to FIGS. 14 and 15, but is, for example, the usage rules information according to the original standard, such as the CI+ (CI Plus) provision, described above with reference to FIGS. 5 and 6.

The information processing apparatus 30 receives the broadcast content (program) and the usage rules information according to the original standard, such as the CI+ (CI Plus) provision, from the transmission apparatus 20, such as a broadcasting station. Furthermore, in the case where the information processing apparatus 30 records the received broadcast content (program) in the information recording medium (media) 40, the information processing apparatus 30 needs to convert the usage rules information defined by CI+ (CI Plus) or the like received in conjunction with the broadcast content into usage rules information defined by AACS and record the usage rules information in the information recording medium (media) 40.

In this way, the information processing apparatus 30 needs to apply the mapping process between different standards to the usage rules information including the copy control information and record the usage rules information in the information recording medium (media).

The usage rules information corresponding to the CI+ (CI Plus) provision described above with reference to FIG. 6 and the usage rules information defined by AACS described with reference to FIGS. 14 and 15 include many similar provisions. For example, for the following pieces of information (1) to (5) included in the CI+ (CI Plus) provision described with reference to FIG. 6, that is,
(1) analog output content protection information (aps_control_info),
(2) content encryption control information (emi_copy_control_info),
(3) output image control information (ict_copy_control_info),
(4) content redistribution control information (rct_copy_control_info), and
(5) digital only output control information (dot_copy_control_info),
the setting values defined by CI+ (CI Plus) can be converted into set values defined by AACS described with reference to FIGS. 14 and 15, and the set values can be recorded.

What is called a mapping process can be executed to convert the set values defined by CI+ (CI Plus) into the set values defined by AACS and record the set values in the information recording medium.

A specific example of the mapping process will be described in detail in a later stage.

In addition, the following control information included in the CI+ (CI Plus) provision described with reference to FIG. 6, that is,
(6) copy retention limit control information (rl_copy_control_info),
does not exist in the usage rules information defined by AACS described with reference to FIGS. 14 and 15. However, the information is data indicating whether or not to allow retaining and reproducing the recorded data for approximately several hours. For example, in a case of temporarily recording the data in a medium, such as an HDD integrated with a TV, a procedure of prohibiting the reproduction is executed in a case where the TV executes the process according to the CI+ (CI Plus) provision and does not reproduce the data within a defined time period.

Therefore, (6) the copy retention limit control information (rl_copy _control _info) is data not used in long-term usage control of copy data. Therefore, there is not much need to convert the data into the copy control information defined by AACS and record the information, and the information processing apparatus 30 of the present disclosure does not record the control information in the information recording medium (media) 40.

Furthermore, the following control information included in the CI+ (CI Plus) provision described with reference to FIG. 6, that is,
(7) trick mode control information (trick_mode_control_info),
also does not exist in the usage rules information defined by AACS described with reference to FIGS. 14 and 15, but it is estimated that the control information is necessary for the usage control of copy data. Therefore, in the case where the information processing apparatus 30 that receives the broadcast program from the broadcasting station and that records the data in the information recording medium (media) records the broadcast data in the information recording medium (media), such as a BD and an HDD, the information processing apparatus 30 adds control information corresponding to (7) the trick mode control information (trick _mode _control _info) to the existing control information defined by AACS and records the control information.

That is, the following control information,
(additional control information) trick mode control information (trick_mode_control_info),
is additionally recorded as additional control information for the usage rules information defined by AACS as illustrated in FIG. 18.

The "trick mode control information (trick_mode_control_info)" additionally recorded in the information recording medium is data of 1 bit indicating whether or not to limit (for example, prohibit) special reproduction (trick play) of the copy content recorded in the information recording medium, that is, special reproduction, such as fast-forward reproduction, slow reproduction, and skip reproduction. The following information is indicated according to the value of the bit.
0 = Trick mode reproduction (special reproduction) not limited
1 = Trick mode reproduction (special reproduction) limited

As described with reference to FIG. 17, the information processing apparatus 30 receives the broadcast content (program) and the usage rules information according to the original standard, such as CI+ (CI Plus) provision, from the transmission apparatus 20, such as a broadcasting station, and records the received broadcast content (program) in the information recording medium (media) 40. In the process, the information processing apparatus 30 converts the usage rules information defined by CI+ (CI Plus) or the like received in conjunction with the broadcast content into the usage rules information defined by AACS and records the usage rules information in the information recording medium (media) 40.

The usage rules information recorded in the information recording medium 40 by the information processing apparatus 30 is recorded in at least one of the usage rules information file (Usage File) 121 or the embedded copy control information (Embedded CCI) 122 as described above with reference to FIG. 16.

FIGS. 19 and 20 illustrate data configuration examples of the usage rules information including the copy control information defined by AACS recorded in the information recording medium 40.

FIG. 19 is a data configuration example of the usage rules information recorded in the information recording medium 40 according to the AACS 2 provision. The information processing apparatus corresponding to AACS 2 executes a process of recording the usage rules information illustrated in FIG. 19 in the information recording medium 40. The information processing apparatus corresponding to AACS 2 is, for example, an apparatus of a latest model that can process UHD (high quality) content, such as 4K content.

FIG. 19 illustrates the following usage rules information.
(1) EPN (1 bit): output data encryption necessity information during copying process
(2) CCI (2 bits): copy control information
(3) Standard_Digital_Output_Flag (1 bit): digital output allowance standard information
(4) Move _Not _Allowed (1 bit): moving process allowance information
(5) Trusted_Source_Mark_Screening_Required (1 bit): source checking process (digital watermark (Watermark) detection process) necessity information
(6) Trick _mode _control _info (1 bit): trick play (special reproduction) limitation information

In the pieces of usage rules information of (1) to (6), (1) to (5) include the existing usage rules information of AACS 2 described above with reference to FIG. 14. The information (6) is usage rules information to be newly added and recorded not included in the existing usage rules information of AACS 2.

The information processing apparatus 30 records the pieces of usage rules information of (1) to (6) in at least one of the usage rules information file (Usage File) 121 or the embedded copy control information (Embedded CCI) 122 as described above with reference to FIG. 16.

For (1) to (5) of the pieces of usage rules information of (1) to (6) illustrated in FIG. 19, the information processing apparatus 30 converts the set values defined by CI+ (CI Plus) into set values defined by AACS and records the set values in the information recording medium. For (6), the information processing apparatus 30 records the set value defined by CI+ (CI Plus) in the information recording medium as it is as described above with reference to FIG. 18.

FIG. 20 is a data configuration example of the usage rules information recorded in the information recording medium 40 according to the AACS 1 provision.

An information processing apparatus corresponding to AACS 1 executes a process of recording the usage rules information illustrated in FIG. 20 in the information recording medium 40. The Information processing apparatus corresponding to AACS 1 is, for example, an apparatus of an old model that cannot process the UHD (high quality) content, such as 4K content.

FIG. 20 illustrates the following pieces of usage rules information.
(1) EPN (1 bit): output data encryption necessity information during copying process
(2) CCI (2 bits): copy control information
(3) Move _Not _Allowed (1 bit): moving process allowance information
(4) Trusted_Source_Mark_Screening_Rrequired (1 bit): source checking process (digital watermark (Watermark) detection process) necessity information
(5) Image_Constraint_Token (1 bit): output image control information
(6) Digital_Only_Token (1 bit): digital only output control information
(7) APSTB (3 bits): protection rule of analog output content
(8) Trick_mode_control_info (1 bit): trick play (special reproduction) limitation information

In the pieces of usage rules information of (1) to (8), (1) to (7) include the existing usage rules information of AACS 1 described above with reference to FIG. 15. The information (8) is usage rules information to be newly added and recorded not included in the existing usage rules information of AACS 1.

The information processing apparatus 30 records the pieces of usage rules information of (1) to (8) in at least one of the usage rules information file (Usage File) 121 or the embedded copy control information (Embedded CCI) 122 as described above with reference to FIG. 16.

For (1) to (7) in the pieces of usage rules information of (1) to (8) illustrated in FIG. 20, the information processing apparatus 30 converts the set values defined by CI+ (CI Plus) into set values defined by AACS and records the set values in the information recording medium. For (8), the information processing apparatus 30 records the set value defined by CI+ (CI Plus) in the information recording medium as it is as described above with reference to FIG. 18.

Next, a specific example of the mapping process of the usage rules information executed by the information processing apparatus 30, that is, the mapping process of converting the set values defined by CI+ (CI Plus) received from the broadcasting station into the set values defined by AACS, will be described.

First, a specific example of the mapping process of converting the set values defined by CI+ (CI Plus) received from the broadcasting station into the set values defined by AACS 2 will be described with reference to FIG. 21.

The information processing apparatus corresponding to AACS 2 uses mapping data illustrated in FIG. 21 to execute the mapping process of converting the set values defined by CI+ (CI Plus) received from the broadcasting station into the set values defined by AACS 2. Note that the mapping data illustrated in FIG. 21 is stored in a storage unit in the information processing apparatus 30.

The mapping data illustrated in FIG. 21 will be described.

FIG. 21 illustrates the usage rules information defined by CI+ (CI Plus) received from the broadcasting station on the left side and illustrates the usage rules information defined by AACS 2 recorded in the information recording medium on the right side.

Arrows illustrated at the intermediate position correspond to the mapping process executed by the information processing apparatus 30. That is, the arrow indicates the set value defined by AACS 2 corresponding to each set value of the usage rules information defined by CI+ (CI Plus). The set values of the usage rules information defined by CI+ (CI Plus) are converted into the set values of the usage rules information defined by AACS 2 according to the arrows, and the set values are recorded in the information recording medium 40.

The left side of FIG. 21 illustrates the following information as the usage rules information defined by CI+ (CI Plus) received from the broadcasting station.
(1) Analog output content protection information (aps_control_info)
(2) Content encryption control information (emi_copy_control_info)
(3) Output image control information (ict_copy_control_info)
(4) Content redistribution control information (rct_copy_control_info)
(5) Digital only output control information (dot_copy_control_info)
(6) Copy retention limit control information (rl_copy_control_info)
(7) Trick mode control information (trick_mode_control_info)

The information processing apparatus 30 acquires the usage rules information from the delivery data of the broadcasting station and converts the usage rules information into the usage rules information of AACS 2 according to the mapping rules illustrated in FIG. 21.

Hereinafter, details of the conversion process of the information will be described.

### (1) Analog output content protection information (aps_control_info)

(1) Analog output content protection information (aps_control_info) defined by CI+ (CI Plus) is protection information regarding analog output content, and the following analog output content protection information is recorded.
   00 = Analog output content not protected
   (01/10/11) = Analog output content protected (different protection modes corresponding to bit values are defined)

The mapping process is not applied to (1) the analog output content protection information (aps_control_info) defined by CI+ (CI Plus). This is because the analog output is entirely prohibited in the AACS 2 provision so that the control information of the analog output data does not have to be recorded.

### (2) Content encryption control information (emi_copy_control_info)

(2) Content encryption control information (emi_copy_control_info) defined by CI+ (CI Plus) is encryption control information regarding content, and the following encryption control information regarding content corresponding to bit value (2 bits) setting is recorded.
00 = No copy limitation (Copy Free)
01 = No more copy allowed (No More Copy)
10 = Copy of only one generation permitted (Copy Once)
11 = Copy not allowed (Copy Never)

The mapping data of (2) the content encryption control information (emi_copy_control_info) defined by CI+ (CI Plus) is CCI (copy control information) defined by AACS 2. The CCI (copy control information) defined by AACS 2 is allowance information of copying process, and the following copy control information corresponding to bit value (2 bits) setting is recorded.
00 = No copy limitation (Copy Control Not Asserted)
01 = No more copy allowed (No More Copy)
10 = Copy of only one generation allowed (Copy One Generation)
11 = Copy not allowed (Never Copy)

The mapping process is executed according to the following setting.

The following set value of the content encryption control information defined by CI+ (CI Plus), that is,
the set value
00 = no copy limitation,
is mapped to the following set value of the CCI (copy control information) defined by AACS 2.
00 = No copy limitation (Copy Control Not Asserted)

In addition, the following set values of the content encryption control information defined by CI+ (CI Plus), that is,
the set values
01 = no more copy allowed,
10 = copy of only one generation permitted, and
11 = copy not allowed,
are mapped to the following set value of the CCI (copy control information) defined by AACS 2.
01 = No more copy allowed (No More Copy)

Note that as for the set value "10 = copy of only one generation permitted" defined by CI+ (CI Plus), it is assumed that the copy is completed once when the content is recorded in the information recording medium.

### (3) Output image control information (ict_copy_control_info)

(3) Output image control information (ict_copy_control_info) defined by CI+ (CI Plus) is control information regarding output image. A rule regarding the resolution limitation during analog output is defined, and the following rule regarding the resolution limitation during analog output is recorded.
0 = Output image not limited
1 = Output image limited (resolution limited)

The mapping process is not applied to (3) the output image control information (ict_copy_control_info) defined by CI+ (CI Plus). This is because the analog output is entirely prohibited in the AACS 2 provision so that the control information of the analog output data does not have to be recorded.

### (4) Content redistribution control information (rct_copy_control_info)

(4) Content redistribution control information (rct_copy_control_info) defined by CI+ (CI Plus) is redistribution limitation presence/absence information of copy free content and is applied in the case of (2) encryption mode information (emi_copy_control_info) = 00 (no copy limitation). The following redistribution limitation presence/absence information of copy free content corresponding to bit value (1 bit) setting is recorded.
0 = Content redistribution not limited
1 = Content redistribution limited

The mapping data of (4) the content redistribution control information (rct_copy_control_info) defined by CI+ (CI Plus) is EPN (output data encryption necessity information) defined by AACS 2. The following output data encryption necessity information corresponding to bit value (1 bit) setting is recorded in the EPN (output data encryption necessity information) defined by AACS 2.
0 = Encryption of copy output data necessary (EPN-asserted)
1 = Encryption of copy output data not necessary (EPN-unasserted)

The mapping process is executed according to the following setting.

The following set value of the content redistribution control information (rct_copy_control_info) defined by CI+ (CI Plus), that is,
the set value
0 = content redistribution not limited,
is mapped to the following set value of the EPN (output data encryption necessity information) defined by AACS 2.
1 = Encryption of copy output data not necessary (EPN-unasserted) (= redistribution not limited)

In addition, the following set value of the content redistribution control information (rct_copy_control_info) defined by CI+ (CI Plus), that is,
the set value
1 = content redistribution limited,
is mapped to the following set value of the EPN (output data encryption necessity information) defined by AACS 2.
0 = Encryption of copy output data necessary (EPN-asserted) (= redistribution limited)

### (5) Digital only output control information (dot_copy_control_info)

The digital only output control information (dot_copy_control_info) defined by CI+ (CI Plus) is a flag indicating whether or not to prohibit analog output.

The mapping process is not applied to the control information. This is because the analog output is entirely prohibited in the AACS 2 provision so that the control information of the analog output data does not have to be recorded.

### (6) Copy retention limit control information (rl_copy_control_info)

(6) Copy retention limit control information (rl_copy_control_info) defined by CI+ (CI Plus) is a control value indicating whether or not to allow retaining and reproducing the recorded data for approximately several hours as described above. For example, in a case of temporarily recording the data in a medium, such as an HDD integrated with a TV, a procedure of prohibiting the reproduction is executed in a case where the TV executes the process according to the CI+ (CI Plus) provision and does not reproduce the data within a defined time period.

Therefore, (6) the copy retention limit control information (rl_copy_control_info) is considered as data that does not have to be used for long-term usage control of copy data, and the information is not mapped to the copy control information defined by AACS.

### (7) Trick mode control information (trick_mode_control_info)

For (7) trick mode control information (trick_mode_control_info) defined by CI+ (CI Plus), the following bit values are recorded as reproduction limitation information of special reproduction (trick play) of content, such as, for example, fast-forward reproduction, slow reproduction, and skip reproduction.
0 = Trick mode reproduction (special reproduction) not limited
1 = Trick mode reproduction (special reproduction) limited

As described above with reference to FIG. 18, the control information does not exist in the usage rules information defined by AACS, but it is estimated that the control information is necessary in the usage control of copy data. Therefore, in the case where the information processing apparatus 30 that receives the broadcast program from the broadcasting station and that records the data in the information recording medium (media) records the broadcast data in the information recording medium (media), such as a BD and an HDD, the information processing apparatus 30 adds the control information corresponding to (7) the trick mode control information (trick_mode_control_info) to the existing control information defined by AACS and records the control information.

In the mapping process, any one of the following set values of the trick mode control information (trick_mode_control_info) defined by CI+ (CI Plus), that is,
one of the set values
0 = trick mode reproduction (special reproduction) not limited and
1 = trick mode reproduction (special reproduction) limited,
is recorded as it is as additional control information for the usage rules information defined by AACS 2. That is, one of the set values
0 = trick mode reproduction (special reproduction) not limited and
1 = trick mode reproduction (special reproduction) limited
is recorded in the information recording medium.

The information processing apparatus corresponding to AACS 2 uses the mapping data illustrated in FIG. 21 to execute the mapping process of converting the set value defined by CI+ (CI Plus) received from the broadcasting station into the set value defined by AACS 2 and record the set value as the usage rules information defined by AACS 2 in the information recording medium. As a result of the process, the information processing apparatus that executes a using process, such as reproduction and copying, of the content recorded in the information recording medium can refer to the usage rules information defined by AACS 2 recorded in the information recording medium to perform the usage control inheriting the usage rules information defined by CI+ (CI Plus) set according to the original broadcast content.

Next, a specific example of the mapping process of converting the set value defined by CI+ (CI Plus) received from the broadcasting station into the set value defined by AACS 1 will be described with reference to FIGS. 22 and 23.

The information processing apparatus corresponding to AACS 1 uses the mapping data illustrated in FIGS. 22 and 23 to execute the mapping process of converting the set value defined by CI+ (CI Plus) received from the broadcasting station into the set value defined by AACS 1. Note that the mapping data illustrated in FIGS. 22 and 23 is stored in the storage unit in the information processing apparatus 30.

FIGS. 22 and 23 illustrate the usage rules information defined by CI+ (CI Plus) received from the broadcasting station on the left side and illustrates the usage rules information defined by AACS 1 recorded in the information recording medium on the right side.

Arrows illustrated at the intermediate position correspond to the mapping process executed by the information processing apparatus 30. That is, the arrow indicates the set value defined by AACS 1 corresponding to each set value of the usage rules information defined by CI+ (CI Plus). The set values of the usage rules information defined by CI+ (CI Plus) are converted into the set values of the usage rules information defined by AACS 1 according to the arrows, and the set values are recorded in the information recording medium 40.

The left side of FIGS. 22 and 23 illustrates the following information as usage rules information defined by CI+ (CI Plus) received from the broadcasting station.
(1) Analog output content protection information (aps_control_info)
(2) Content encryption control information (emi_copy_control_info)
(3) Output image control information (ict_copy_control_info)
(4) Content redistribution control information (rct_copy_control_info)
(5) Digital only output control information (dot_copy_control_info)
(6) Copy retention limit control information (rl_copy_control_info)
(7) Trick mode control information (trick_mode_control_info)

The information processing apparatus 30 acquires the usage rules information from the delivery data of the broadcasting station and converts the usage rules information into usage rules information of AACS 1 according to mapping rules illustrated in FIGS. 22 and 23.

Hereinafter, details of the conversion process of the information will be described.

### (1) Analog output content protection information (aps_control_info)

(1) Analog output content protection information (aps_control_info) defined by CI+ (CI Plus) is protection information regarding analog output content, and the following analog output content protection information is recorded.
00 = Analog output content not protected
01 = Analog output content protected (execute AGC process under split burst off setting)
10 = Analog output content protected (execute AGC process under 2-line split burst on setting)
01 = Analog output content protected (execute AGC process under 4-line split burst on setting)

The mapping data of (1) the analog output content protection information (aps_control_info) defined by CI+ (CI Plus) is APSTB (analog output content protection rule) defined by AACS 1. One of the following set values is recorded in the APSTB (analog output content protection rule) defined by AACS 1.
000 = Analog output content not protected
001 = APS 1 (Analog Protection System 1) on: type 1 (AGC)
010 = APS 1 (Analog Protection System 1) on: type 2 (AGC + 2L colour stripe)
011 = APS 1 (Analog Protection System 1) on: type 3 (AGC + 4L colour stripe)

The mapping process is executed according to the following setting.

The set value of the analog output content protection information (aps_control _info) defined by CI+ (CI Plus), that is,
the set value
00 = analog output content not protected,
is mapped to the following set value of the APSTB (analog output content protection rule) defined by AACS 1.
000 = Analog output content not protected

Furthermore, the following set values of the analog output content protection information (aps_control_info) defined by CI+ (CI Plus), that is,
01 = analog output content protected (execute AGC process under split burst off setting),
10 = analog output content protected (execute AGC process under 2-line split burst on setting), and
01 = analog output content protected (execute AGC process under 4-line split burst on setting),
are mapped to the following respective set values of the APSTB (analog output content protection rule) defined by AACS 1.
001 = APS 1 (Analog Protection System 1) on: type 1 (AGC)
010 = APS 1 (Analog Protection System 1) on: type 2 (AGC + 2L colour stripe)
011 = APS 1 (Analog Protection System 1) on: type 3 (AGC + 4L colour stripe)

### (2) Content encryption control information (emi_copy_control_info)

(2) Content encryption control information (emi_copy_control_info) defined by CI+ (CI Plus) is encryption control information regarding content, and the following encryption control information regarding content corresponding to bit value (2 bits) setting is recorded.
00 = No copy limitation (Copy Free)
01 = No more copy allowed (No More Copy)
10 = Copy of only one generation permitted (Copy Once)
11 = Copy not allowed (Copy Never)

The mapping data of (2) the content encryption control information (emi_copy_control_info) defined by CI+ (CI Plus) is CCI (copy control information) defined by AACS 1. The CCI (copy control information) defined by AACS 1 is allowance information of copying process, and the following copy control information corresponding to bit value (2 bits) setting is recorded.
00 = No copy limitation (Copy Control Not Asserted)
01 = No more copy allowed (No More Copy)
10 = Copy of only one generation allowed (Copy One Generation)
11 = Copy not allowed (Never Copy)

The mapping process is executed according to the following setting.

The set value of the content encryption control information defined by CI+ (CI Plus), that is,
the set value
00 = no copy limitation,
is mapped to the following set value of the CCI (copy control information) defined by AACS 2.
00 = No copy limitation (Copy Control Not Asserted)

In addition, the following set values of the content encryption control information defined by CI+ (CI Plus), that is,
the set values
01 = No more copy allowed,
10 = Copy of only one generation permitted, and
11 = Copy not allowed,
are mapped to the following set value of the CCI (copy control information) defined by AACS 2.
01 = No more copy allowed (No More Copy)

Note that as for the set value "10 = copy of only one generation permitted" defined by CI+ (CI Plus), it is assumed that the copy is completed once when the content is recorded in the information recording medium.

### (3) Output image control information (ict_copy_control_info)

(3) Output image control information (ict_copy_control_info) defined by CI+ (CI Plus) is control information regarding output image. A rule regarding resolution limitation during analog output is defined, and the following rule regarding the resolution limitation during analog output is recorded.
0 = Output image not limited
1 = Output image limited (resolution limited)

The mapping data of (3) the output image control information (ict_copy_control_info) defined by CI+ (CI Plus) is Image_Constraint_Toke (output image control information) defined by AACS 1. A rule regarding the resolution limitation during analog output is recorded in Image_Constraint_Toke (output image control information) defined by AACS 1. The following output image control information corresponding to bit value (1 bit) setting can be recorded.
0 = Output image limited (resolution limited)
1 = Output image not limited (resolution not limited)

The mapping process is executed according to the following setting.

The following set value of the output image control information (ict_copy_control_info) defined by CI+ (CI Plus), that is,
the set value
0 = output image not limited,
is mapped to the following set value of Image_Constraint_Toke (output image control information) defined by AACS 1.
1 = Output image not limited (resolution not limited)

In addition, the following set value of the output image control information (ict_copy_control_info) defined by CI+ (CI Plus), that is,
the set value
1 = output image limited (resolution limited),
is mapped to the following set value of Image_Constraint_Toke (output image control information) defined by AACS 1.
0 = Output image limited (resolution limited)

### (4) Content redistribution control information (rct_copy_control_info)

(4) Content redistribution control information (rct_copy_control_info) defined by CI+ (CI Plus) is redistribution limitation presence/absence information of copy free content and is applied in the case of (2) encryption mode information (emi_copy_control_info) = 00 (no copy limitation). The following redistribution limitation presence/absence information of copy free content corresponding to bit value (1 bit) setting is recorded.
0 = Content redistribution not limited
1 = Content redistribution limited

The mapping data of (4) the content redistribution control information (rct_copy_control_info) defined by CI+ (CI Plus) is EPN (output data encryption necessity information) defined by AACS 1. The following output data encryption necessity information corresponding to bit value (1 bit) setting is recorded in the EPN (output data encryption necessity information) defined by AACS 1.
0 = Encryption of copy output data necessary (EPN-asserted)
1 = Encryption of copy output data not necessary (EPN-unasserted)

The mapping process is executed according to the following setting.

The following set value of the content redistribution control information
(rct_copy_control_info) defined by CI+ (CI Plus), that is,
the set value
0 = content redistribution not limited,
is mapped to the following set value of the EPN (output data encryption necessity information) defined by AACS 1.
1 = Encryption of copy output data not necessary (EPN-unasserted) (= redistribution not limited)

In addition, the following set value of the content redistribution control information
(rct_copy_control_info) defined by CI+ (CI Plus), that is,
the set value
1 = content redistribution limited,
is mapped to the following set value of the EPN (output data encryption necessity information) defined by AACS 1.
0 = Encryption of copy output data necessary (EPN-asserted) (= redistribution limited)

### (5) Digital only output control information (dot_copy_control_info)

The digital only output control information (dot_copy_control_info) defined by CI+ (CI Plus) is a flag indicating whether or not to prohibit analog output. The following digital only output limitation information can be recorded.
0 = Output data not limited to only digital data (analog output possible)
1 = Output data limited to only digital data (analog output prohibited)

The mapping data of (5) the digital only output control information (dot_copy_control_info) defined by CI+ (CI Plus) is Digital_Only_Token (digital only output control information) defined by AACS 1. The following information indicating whether or not to prohibit the analog output is recorded in Digital_Only_Token (digital only output control information defined) by AACS 1.
0 = Output data not limited to only digital data (analog output possible)
1 = Output data limited to only digital data (analog output prohibited)

The mapping process is executed according to the following setting.

The following set value of the digital only output control information (dot_copy_control_info) defined by CI+ (CI Plus), that is,
the set value
0 = Output data not limited to only digital data (analog output possible),
is mapped to the following set value of Digital_Only_Token (digital only output control information) defined by AACS 1.
0 = Output data not limited to only digital data (analog output possible)

In addition, the following set value of the digital only output control information (dot_copy_control_info) defined by CI+ (CI Plus), that is, the set value
1 = Output data limited to only digital data (analog output prohibited),
is mapped to the following set value of Digital_Only_Token (digital only output control information) defined by AACS 1.
1 = Output data limited to only digital data (analog output prohibited)

### (6) Copy retention limit control information (rl_copy_control_info)

(6) Copy retention limit control information (rl_copy_control_info) defined by CI+ (CI Plus) is a control value indicating whether or not to allow retaining and reproducing the recorded data for approximately several hours as described above. For example, in a case of temporarily recording the data in a medium, such as an HDD integrated with a TV, a procedure of prohibiting the reproduction is executed in a case where the TV executes the process according to the CI+ (CI Plus) provision and does not reproduce the data within a defined time period.

Therefore, (6) the copy retention limit control information (rl_copy _control _info) is considered as data that does not have to be used for long-term usage control of copy data, and the information is not mapped to the copy control information defined by AACS.

### (7) Trick mode control information (trick _mode _control _info)

For (7) trick mode control information (trick_mode_control_info) defined by CI+ (CI Plus), the following bit values are recorded as reproduction limitation information of special reproduction (trick play) of content, such as, for example, fast-forward reproduction, slow reproduction, and skip reproduction.
0 = Trick mode reproduction (special reproduction) not limited
1 = Trick mode reproduction (special reproduction) limited

As described above with reference to FIG. 18, the control information does not exist in the usage rules information defined by AACS, but it is estimated that the control information is necessary in the usage control of copy data. Therefore, in the case where the information processing apparatus 30 that receives the broadcast program from the broadcasting station and that records the data in the information recording medium (media) records the broadcast data in the information recording medium (media), such as a BD and an HDD, the information processing apparatus 30 adds the control information corresponding to (7) the trick mode control information (trick_mode_control_info) to the existing control information defined by AACS and records the control information.

In the mapping process, one of the following set values of the trick mode control information (trick_mode_control_info) defined by CI+ (CI Plus), that is,
one of the set values
0 = Trick mode reproduction (special reproduction) not limited and
1 = Trick mode reproduction (special reproduction) limited,
is recorded as it is as additional control information for the usage rules information defined by AACS 1. That is, one of the set values
0 = Trick mode reproduction (special reproduction) not limited and
1 = Trick mode reproduction (special reproduction) limited
is recorded in the information recording medium.

The information processing apparatus corresponding to AACS 1 uses the mapping data illustrated in FIGS. 22 and 23 to execute the mapping process of converting the set value defined by CI+ (CI Plus) received from the broadcasting station into the set value defined by AACS 2 and record the set value as the usage rules information defined by AACS 1 in the information recording medium. As a result of the process, the information processing apparatus that executes a using process, such as reproduction and copying, of the content recorded in the information recording medium can refer to the usage rules information defined by AACS 1 recorded in the information recording medium to perform the usage control inheriting the usage rules information defined by CI+ (CI Plus) set according to the original broadcast content.

### [6. Recording Configuration Example of Embedded Copy Control Information]

As described above with reference to FIGS. 16 to 20, in the case where the information processing apparatus 30 converts the usage rules information defined by CI+ (CI Plus) or the like received in conjunction with the broadcast content into the usage rules information defined by AACS and records the usage rules information in the information recording medium (media) 40, the information processing apparatus 30 records the usage rules information in at least one of the usage rules information file (Usage File) 121 defined by AACS or the embedded copy control information (Embedded CCI) 122.

In the case of recording the usage rules information in the usage rules information file (Usage File) 121, the information processing apparatus 30 is only required to apply the mapping process described with reference to FIGS. 21 to 23 to the usage rules information defined by CI+ (CI Plus) or the like received in conjunction with the broadcast content to generate the control information defined by AACS and generate the usage rules information file (Usage File) 121 recording the generated data to record the usage rules information.

On the other hand, in the case of recording, in the embedded copy control information (Embedded CCI) 122, the control information defined by AACS generated in the mapping process described with reference to FIGS. 21 to 23, the information processing apparatus 30 records, in the PMT (Program Map Table (program map table)) stored in the TS packet included in the clip AV stream file, the control information defined by AACS generated in the mapping process.

A control information recording configuration example of the embedded copy control information (Embedded CCI) 122 will be described with reference to FIG. 24 and the following drawings.

The program map table (PMT) as a recording place of the embedded copy control information (Embedded CCI) 122 is stored in the TS packet, and along with the TS packet storing data as data to be reproduced, such as images, sound, and subtitles, the program map table (PMT) is stored in the clip AV stream file defined by the BDAV format.

The program map table (PMT) defined by the MPEG-2TS format will be described with reference to FIG. 24.

FIG. 24 is a diagram illustrating a data configuration (syntax: Syntax) of the program map table (PMT) .

Note that as illustrated in FIG. 24, the program map table (PMT) is stored in the TS packet that is a configuration packet of in the clip AV stream file.

A copy status descriptor (copy_status_descriptor) 201 is recorded as one of descriptors (descriptor) of the program map table (PMT).

FIG. 25 illustrates a data configuration (syntax: Syntax) of the copy status descriptor (copy_status_descriptor) 201.

The following data is included in the copy status descriptor (copy_status_descriptor).
Descriptor tag (descriptor_tag) = descriptor identifier
Descriptor length (descriptor_length) = the number of descriptor bytes
CA system ID (CA_System_ID) = identifier indicating application target
Private data byte (private_data_byte) = private data recording area

In the data, the private data byte (private_data_byte) = private data recording area is an area where various types of data can be recorded.

The usage rules information received through a broadcast wave or the like, such as the usage rules information including the copy control information defined by AACS generated in the mapping process based on the usage rules information defined by CI+ (CI Plus), is recorded in the private data recording area.

A data configuration example of the private data recording area will be described with reference to FIG. 26 and the following drawings.

The following pieces of data is recorded in the private data recording area as illustrated in FIG. 26. Trick mode control information (Trick_Mode_Control) Retention move mode (Retention_Move_Mode) Retention state (Retention_State)
EPN = Copy output data encryption necessity information
CCI = Copy control information

Note that the data can be recorded in predetermined content sections on the basis of, for example, programs or the like.

In the data areas of
trick mode control information (Trick_Mode_Control),
EPN = copy output data encryption necessity information, and
CCI = copy control information
in the data, the control information defined by AACS generated in the mapping process based on the mapping data described above with reference to FIGS. 21 to 23 is recorded.

Note that in a case of checking other usage rules information defined by AACS generated in the mapping process, the usage rules information file (Usage File) is only required to be referenced.

The retention move mode (Retention_Move_Mode) and the retention state (Retention_State) are information regarding the copy allowance period of data. In the process of the present disclosure, the data is not used.

In the data recording areas of
trick mode control information (Trick_Mode_Control),
EPN = copy output data encryption necessity information, and
CCI = copy control information,
the values acquired in the mapping processes using the mapping data of FIGS. 21 to 23 are recorded.

Specifically, values illustrated for example in FIG. 27 are recorded.

One of the following bit values (1 bit) is recorded in the data recording area of "trick mode control information (trick_mode_control_info)."
0 = Trick mode reproduction (special reproduction) not limited
1 = Trick mode reproduction (special reproduction) limited

In addition, one of the following bit values (1 bit) is recorded in the data recording area of "EPN (output data encryption necessity information)."
0 = Encryption of copy output data necessary (EPN-asserted)
1 = Encryption of copy output data not necessary (EPN-unasserted)

Furthermore, one of the following bit values (2 bits) is recorded in the data recording area of "CCI (copy control information)."
00 = No copy limitation (Copy Control Not Asserted)
01 = No more copy allowed (No More Copy)

In this way, in the case of recording, in the embedded copy control information (Embedded CCI) 122, the control information defined by AACS generated in the mapping process described with reference to FIGS. 21 to 23, the control information defined by AACS generated in the mapping process is recorded in the PMT (Program Map Table (program map table)) stored in the TS packet included in the clip AV stream file.

### [7. Configuration Example of Recording Trick Mode Control Information in Reproduction Control Information File]

Next, a configuration example of recording the trick mode control information (trick _mode _control _info) in the reproduction control information file will be described.

As described above, the trick mode control information (trick _mode _control _info) is control information not defined in the usage rules information defined by AACS. In the example described above in the embodiment, the trick mode control information (trick_mode_control_info) is also recorded, in the PMT (program map table), as the usage rules information file 121 or the embedded copy control information 122 defined by AACS described with reference to FIG. 16, just like other control information defined by AACS.

The trick mode control information (trick_mode_control_info) may be recorded in, for example, the playlist file or the clip information file that is a reproduction control information file defined by the BDAV format that is a data recording format of the information recording medium.

Note that the trick mode control information (trick_mode_control_info) is recorded in the usage rules information file 121 or the embedded copy control information 122 and may be further recorded in the playlist file or the clip information file.

Hereinafter, an example of recording the trick mode control information (trick_mode_control_info) in the playlist file or the clip information file will be described.

FIG. 28 is a diagram illustrating a directory configuration example of the data recorded in the information recording medium (media) 40 according to the BDAV format as in the case described above with reference to FIG. 11.

In the directory, for example,
the following files, that is,
playlist files (playlist) and
clip information files (clipinf),
are recorded as reproduction control information files.

Furthermore, clip AV stream files (stream) are recorded as reproduction data storage files.

The playlist files are files defining the reproduction order or the like of the content according to the program information of the reproduction programs designated by the titles, and the playlist files include, for example, designation information or the like of the clip information files recording reproduction position information or the like.

The clip information files are files designated by the playlist files, and the clip information files include reproduction position information or the like of the clip AV stream files.

The clip AV stream files are files storing AV stream data to be reproduced and management information. The clip AV stream files include packets storing data, such as images, sound, and subtitles, to be reproduced and management information.

As described above with reference to FIG. 12, the playlist file or the clip information file as a reproduction control information file is used to reproduce the images or sound stored in the clip AV stream file.

That is, in the case where the reproduction apparatus that reproduces data from the information recording medium selects and reproduces the clip AV stream file stored in the content to be reproduced, the reproduction apparatus always acquires and refers to the playlist file or the clip information file as a reproduction control information file associated with the clip AV stream file to execute the reproduction process.

The trick mode control information (trick_mode_control_info) is recorded in the playlist files and the clip information files as reproduction control information files, and the reproduction apparatus can check whether or not the content to be reproduced is content that allows the trick play, that is, special reproduction, such as fast-forwarding, slow reproduction, and skip reproduction. Note that in the case of recording the trick mode control information
(trick _mode _control _info) in the playlist file or the clip information file, both the setting of recording the information in only one of the files and the setting of recording the information in both of the files are possible.

The following two examples will be sequentially described.
(Process Example 1) Example in which the trick mode control information (trick _mode _control _info) is recorded in the playlist file
(Process Example 2) Example in which the trick mode control information (trick_mode_control_info) is recorded in the clip information file

### (Process Example 1) Example in which the trick mode control information (trick_mode_control_info) is recorded in the playlist file

First, an example in which the trick mode control information (trick _mode _control _info) is recorded in the playlist file will be described as (process example 1).

FIG. 29 is a diagram illustrating a data configuration (syntax) of user interface application information [UIAppInfoPlayList] that is configuration data of the playlist file.

The user interface application information [UIAppInfoPlayList] is one of the configuration data of the playlist, and parameters of the user interface application are mainly recorded.

The following pieces of data is recorded in the user interface application information
[UIAppInfoPlayList] as illustrated, for example, in FIG. 29.
(P1) Record time and date (record_time_and_date)
(P2) Channel number (channel_number)
(P3) Channel name (channel_name)
(P4) Recorded program name (Playlist_name)
(P5) Recorded program detail (Playlist_detail)

These are information regarding the content (program) recorded in the information recording medium.

For example, the information processing apparatus that records the delivery content (program) from the broadcasting station in the information recording medium (media) extracts the data corresponding to (P1) to (P5) from the received data to generate a playlist file recording the data.

Furthermore, part of a reserved area 231 of the user interface application information
[UIAppInfoPlayList] in the playlist file illustrated in FIG. 29 is used to record the trick mode control information (trick _mode _control _info).

A free space of 5 bits is set in the reserved area 231 illustrated in FIG. 29.

In the 5 bits, 1 bit is set as the recording area of the trick mode control information
(trick _mode _control _info).

That is, a trick mode control information (trick_mode_control_info) recording area 232 of 1 bit is set as illustrated in FIG. 30.

Here, the trick mode control information (trick _mode _control _info) of 1 bit generated in the mapping process based on the mapping data described above with reference to FIGS. 21 to 23, that is, one of the following bit values, is recorded.
0 = Trick mode reproduction (special reproduction) not limited
1 = Trick mode reproduction (special reproduction) limited

In this way, the trick mode control information (trick _mode _control _info) is recorded in the playlist file, and the reproduction apparatus that executes the reproduction process from the information recording medium can check whether or not the content reproduced by using the playlist file is content that allows the trick play, that is, the special reproduction, such as fast-forwarding, slow reproduction, and skip reproduction.

### (Process Example 2) Example in which the trick mode control information (trick _mode _control _info) is recorded in the clip information file

Next, an example in which the trick mode control information (trick_mode_control_info) is recorded in the clip information file will be described as (process example 2).

FIG. 31 is a diagram illustrating a data configuration (syntax) of clip information [ClipInfo()] that is configuration data of the clip information file. The clip information [ClipInfo()]is one of the configuration data of the clip information file, and attribute information of the AV stream file corresponding to the clip information file is mainly recorded.

The following pieces of data is recorded in the clip information [ClipInfo()]as illustrated for example in FIG. 31.
(C1) Stream type
(C2) Encode information
(C3) TS rate information
(C4) Source packet information

For example, the information processing apparatus that records the delivery content (program) from the broadcasting station in the information recording medium (media) generates data corresponding to (C1) to (C4) described above and generates a clip information file recording the data.

Furthermore, part of a reserved area 251 of the clip information [ClipInfo()]of the clip information file illustrated in FIG. 31 is used to record the trick mode control information (trick_mode_control_info).

A free space of 4 bits is set in the reserved area 251 illustrated in FIG. 31.

In the 4 bits, 1 bit is set as a recording area of the trick mode control information
(trick_mode_control_info).

That is, a trick mode control information (trick _mode _control _info) recording area 252 of 1 bit is set as illustrated in FIG. 32.

Here, the trick mode control information (trick_mode_control_info) of 1 bit generated in the mapping process based on the mapping data described above with reference to FIGS. 21 to 23, that is, one of the following bit values, is recorded.
0 = Trick mode reproduction (special reproduction) not limited
1 = Trick mode reproduction (special reproduction) limited

In this way, the trick mode control information (trick_mode_control_info) is recorded in the clip information file, and the reproduction apparatus that executes the reproduction process from the information recording medium can check whether or not the content reproduced by using the clip information file is content that allows the trick play, that is, the special reproduction, such as fast-forwarding, slow reproduction, and skip reproduction.

Note that so far, the following plural examples have been described as recording places of the usage rules information including the copy control information corresponding to AACS generated by mapping the usage rules information received from the broadcasting station.
(1) Usage rules information file (Usage File) set as AACS management data
(2) PMT (program map table) stored in TS packet included in clip AV stream file defined by BDAV and SPAV formats
   (= embedded copy control information (Embedded CCI))
(3) Playlist file
(4) Clip information file

The usage rules information including the copy control information corresponding to AACS generated by mapping the usage rules information received from the broadcasting station is only required to be recorded in at least one of (1) to (4) described above. The same control information may be recorded in duplicate in a plurality of recording places.

### [8. Configuration and Process of Information Processing Apparatus That Executes Process of Recording Data in Information Recording Medium]

Next, the configuration and the process of the information processing apparatus that receives data from the transmission apparatus, such as a broadcasting station, and that executes the process of recording the data in the information recording medium will be described with reference to FIG. 33 and the following drawings.

As described above, the information processing apparatus of the present disclosure records the received data from the transmission apparatus, such as a broadcasting station, as BDAV format or SPAV format data in the information recording medium, such as a BD, an HDD, and a flash memory.

Further, in the data recording process, a process of acquiring the usage rules information, such as copy control information, included in the received data from the transmission apparatus, such as a broadcasting station, and recording the usage rules information in the usage rules information file (Usage File) or the embedded copy control information, specifically, the PMT (program map table), is executed. Furthermore, part of the usage rules information, specifically, the trick mode control information (trick _mode _control _info), is also recorded in the database file, such as a playlist and a clip information file.

The usage rules information, such as copy control information, included in the received data from the transmission apparatus, such as a broadcasting station, is, for example, usage rules information including the copy control information defined by CI+ (CI Plus). Specifically, the control information and the like illustrated in FIG. 6 described above are included.

Hereinafter, the configuration and the process sequence of the information processing apparatus that executes the process of recording the data in the information recording medium, such as a BD, will be described.

Note that, although an apparatus that generates and records BDAV format data and a process example will be described below as a representative example, the apparatus and the process described below can also be applied to the case of generating and recording SPAV format data.

FIG. 33 is a diagram illustrating a configuration of an information processing apparatus 400 that executes the process of recording the data in the information recording medium, such as a BD.

The information processing apparatus 400 records clip AV stream files as well as database files, such as playlists and clip information files, in an information recording medium (recording media) 420.

A data input unit 401 receives data, that is, broadcast delivery data 431, to be recorded in the information recording medium 420. The broadcast delivery data 431 is, for example, transmission data from a broadcasting station, a content server, or the like, and the broadcast delivery data 431 includes data, such as images, sound, and subtitles, included in the content (program) and usage rules information including copy control information corresponding to the content (program).

The usage rules information is, for example, usage rules information defined by CI+ (CI Plus).

The broadcast delivery data 431 input from the data input unit 401 is stored in a storage unit 404 through the control of a control unit 403.

A user input unit 402 receives, for example, a start request or the like for recording data in the information recording medium 420.

Once the data recording start request is input from the user input unit 402, the broadcast delivery data 431 stored in the storage unit 404 is triggered by the input and is input to a demultiplexer (DeMUX) 405.

The demultiplexer (DeMUX) 405 acquires, from the broadcast delivery data 431, packets storing data, such as images, sound, and subtitles, and auxiliary information including notification information and usage rules information, such as reproduction control information and copy control information, and classifies them into packets of data kinds. The demultiplexer (DeMUX) 405 inputs the packets to a subtitle data generation unit 411, an image data generation unit 412, a sound data generation unit 413, and an auxiliary information generation unit 414 of a recorded data generation unit 406 according to the data kinds.

The subtitle data generation unit 411 acquires the subtitle data from the broadcast delivery data 431 input by the data input unit 401 and stored in the storage unit 404 and generates stream file storage data defined by the BDAV format.

The image data generation unit 412 acquires the image data from the broadcast delivery data 431 input by the data input unit 401 and stored in the storage unit 404 and generates stream file storage data defined by the BDAV format.

The sound data generation unit 413 acquires the sound data from the broadcast delivery data 431 input by the data input unit 401 and stored in the storage unit 404 and generates stream file storage data defined by the BDAV format.

The auxiliary information generation unit 414 acquires the auxiliary information, such as the notification information and the control information including the reproduction control information, the copy control information, and the like from the broadcast delivery data 431 input by the data input unit 401 and stored in the storage unit 404 and generates data to be stored in the playlist files, the clip information files, the clip AV stream files, and the like as database files defined by the BDAV format.

The auxiliary information generation unit 414 further executes a process of generating a usage rules information file (Usage File) recording the usage rules information, such as copy control information, and generating embedded copy control information, specifically, a PMT (program map table). Furthermore, the auxiliary information generation unit 414 also records part of the usage rules information, specifically, the trick mode control information (trick _mode _control _info), in the database files, such as playlists and clip information files.

A specific example of the auxiliary information generation unit 414 will be described in a later stage with reference to FIG. 34.

A multiplexer (MUX) 415 receives the data of subtitles, images, and sound converted by the subtitle data generation unit 411, the image data generation unit 412, and the sound data generation unit 413, the PMT (program map table) recording the usage rules information generated by the auxiliary information generation unit 414, and the like and generates stream files storing the data.

A usage rules information file generation unit 416 generates usage rules information files (Usage File) recording the usage rules information, such as copy control information, corresponding to AACS acquired by the auxiliary information generation unit 414 from the control information of the broadcast delivery data 431 and generated in the mapping process.

A database file generation unit 417 generates database files, such as playlist files and clip information files, recording at least part of the data of the usage rules information, such as copy control information, corresponding to AACS acquired by the auxiliary information generation unit 414 from the control information of the broadcast delivery data 431 and generated in the mapping process.

The recorded data generation unit 406 is controlled by the control unit 403 to output and record, in the information recording medium 420 through a drive 407, recorded data 432 including the stream file data, the database files, such as playlist files and clip information files, the usage rules information files, and the like generated by the recorded data generation unit 406.

Next, the detailed configuration and process of the auxiliary information generation unit 414 of the information processing apparatus 400 illustrated in FIG. 33 will be described with reference to FIG. 34.

The auxiliary information generation unit 414 acquires the usage rules information included in the broadcast delivery data 431, such as the usage rules information defined by CI+ (CI Plus), and executes the mapping process to generate usage rules information, such as copy control information, corresponding to AACS. Furthermore, the auxiliary information generation unit 414 executes a process of recording the generated usage rules information, such as copy control information, corresponding to AACS in the usage rules information files (Usage File) and the embedded copy control information, specifically, the PMT (program map table). Furthermore, the auxiliary information generation unit 414 also records part of the usage rules information, specifically, the trick mode control information (trick_mode_control_info), in the database files, such as playlists and clip information files.

As illustrated in FIG. 34, the recorded data generation unit 406 includes the subtitle data generation unit 411, the image data generation unit 412, the sound data generation unit 413, the auxiliary information generation unit 414, the multiplexer (MUX) 415, the usage rules information file generation unit 416, and the database file generation unit 417.

The auxiliary information generation unit 414 includes a data analysis unit 451, a stream file recording control information generation unit 453, a usage rules information file recorded data generation unit 454, and a database file recorded data generation unit 455.

The data analysis unit 451 analyzes the data separated by the demultiplexer (DeMUX) 405 to generate usage rules information, such as copy control information, to be recorded in the information recording medium (recording media) 420.

Specifically, the data analysis unit 451 executes the mapping process based on the mapping data described above with reference to FIGS. 21 to 23 to convert the set values of the usage rules information included in the broadcast delivery data into the set values of the control information defined by AACS to generate the usage rules information including the copy control information corresponding to AACS.

The generated usage rules information including the copy control information is output to the stream file recording control information generation unit 453, the usage rules information file recorded data generation unit 454, and the database file recorded data generation unit 455.

The stream file recording control information generation unit 453 executes a process of recording the usage rules information including the copy control information corresponding to AACS in the PMT (program map table) stored in the TS packets included in the clip AV stream file defined by BDAV. The process corresponds to the generation process of PMT described above with reference to FIGS. 24 to 27. The control information generated in the process is what is called embedded copy control information (Embedded CCI).

The usage rules information file recorded data generation unit 454 executes a process of generating usage rules information including the copy control information corresponding to AACS to be recorded in the usage rules information file (Usage File) that is management data of AACS.

The usage rules information file generation unit 416 generates usage rules information files (Usage File) storing the usage rules information file recorded data generated by the usage rules information file recorded data generation unit 454.

The database file recorded data generation unit 455 executes a process of generating part of the usage rules information, specifically, the trick mode control information (trick _mode _control _info) or the like, to be recorded in the database files, such as playlists and clip information files.

The database file generation unit 417 applies the generated data of the database file recorded data generation unit 455 to generate playlist files and clip information files.

The processes correspond to the processes described above with reference to FIGS. 28 to 32.

The recording data generated by the subtitle data generation unit 411, the image data generation unit 412, and the sound data generation unit 413 and the control information generated by the stream file recording control information generation unit 453 are input to the multiplexer (MUX) 415.

A stream file generation unit 461 of the multiplexer (MUX) 415 generates clip AV stream files including TS packets.

Note that the PMT (program map table) is stored in part of the TS packets included in the stream files. The usage rules information, such as copy control information, corresponding to AACS generated in the mapping process is recorded in the PMT.

The stream files, the database files, and the usage rules information files generated in this way are output to the recording unit 407 as the recorded data 432 for the information recording medium (recording media) 420.

Next, sequences of the data recording process for the information recording medium 420 executed by the information processing apparatus 400 illustrated in FIG. 33 will be described with reference to flow charts illustrated in FIGS. 35 and 36.

FIG. 35 is a flow chart describing a process sequence of the process of recording the usage rules information including the copy control information in the usage rules information file (Usage File) to record the usage rules information in the information recording medium 420.

FIG. 36 is a flow chart describing a process sequence of the process of recording the usage rules information, which includes the copy control information, in the PMT (program map table) stored in the TS packets included in the usage rules information file (Usage File) and the clip AV stream file to record the usage rules information in the information recording medium 420.

First, the process sequence of the process of recording the usage rules information including the copy control information in the usage rules information file (Usage File) to record the usage rules information in the information recording medium 420 will be described with reference to FIG. 35.

The process according to the flow illustrated in FIG. 35 can be executed under the control of a data processing unit (control unit) including a CPU with a program execution function according to a program stored in, for example, the storage unit of the information processing apparatus.

Hereinafter, the processes of the steps illustrated in the flow of FIG. 35 will be sequentially described.

### (Step S101)

First, the information processing apparatus 400 receives the broadcast delivery data that is recording data through the data input unit 401 in step S101.

Note that the image data, the sound data, and the subtitle data included in the content (program) and the usage rules information corresponding to the content (program) are included in the recording data. For example, the usage rules information defined by CI+ (CI Plus) is included.

### (Step S102)

Next, in step S102, the information processing apparatus 400 executes the demultiplexing process of the received broadcast delivery data, that is, the data separation process on the basis of data types. The information processing apparatus 400 executes the separation process of the images, the sound, the subtitles, the usage rules information, and the like.

### (Step S103)

Next, in step S103, the information processing apparatus 400 converts the usage rules information separated in step S102 into the control information defined by AACS.

This is the process of converting the set values of the usage rules information included in the broadcast delivery data into the set values of the control information defined by AACS to generate the usage rules information included in the copy control information corresponding to AACS in the mapping process based on the mapping data described above with reference to FIGS. 21 to 23.

### (Step S104)

Next, in step S104, the information processing apparatus 400 executes the process of recording the usage rules information including the copy control information corresponding to AACS generated in step S103 in the usage rules information file (Usage File) that is management information defined by AACS.

### (Step S105)

Next, in step S105, the information processing apparatus 400 generates the stream file including the TS packet sequence defined by BDAV format.

### (Step S106)

Next, in step S106, the information processing apparatus 400 generates the clip information files, the playlist files, and other database files defined by the BDAV format. Note that in the process, the usage rules information generated in the mapping process may be recorded in at least one of the clip information files or the playlist files.

This is the process described above with reference to FIGS. 28 to 32 and is a process of recording, for example, the trick mode control information (trick _mode _control _info) or the like in at least one of the clip information files or the playlist files.

### (Step S107)

Next, in step S107, the information processing apparatus 400 uses the generated AV stream files and database files to generate the BDAV format data.

### (Step S108)

Next, in step S108, the information processing apparatus 400 generates the management data file defined by AACS including the usage rules information file defined by AACS.

### (Step S109)

Next, in step S109, the information processing apparatus 400 records the BDAV format data and the AACS management data generated in steps S107 and S108 in the information recording medium (media).

Next, the process sequence of the process of recording the usage rules information, which includes the copy control information, in the PMT (program map table) stored in the TS packets included in the usage rules information file (Usage File) and the clip AV stream file to record the usage rules information in the information recording medium 420 will be described with reference to FIG. 36.

The process according to the flow illustrated in FIG. 36 can be executed under the control of a data processing unit (control unit) including a CPU with a program execution function according to a program stored in, for example, the storage unit of the information processing apparatus.

Hereinafter, the processes of the steps illustrated in the flow of FIG. 36 will be sequentially described.

### (Steps S101 to S104)

The processes of steps S101 to S104 are the same processes as the processes of steps S101 to S104 described with reference to FIG. 35.

First, the information processing apparatus 400 receives the broadcast delivery data that is recording data through the data input unit 401 in step S101.

Next, in step S102, the information processing apparatus 400 executes the demultiplexing process of the received broadcast delivery data, that is, the data separation process on the basis of data types. The information processing apparatus 400 executes the separation process of the images, the sound, the subtitles, the usage rules information, and the like.

Next, in step S103, the information processing apparatus 400 converts the usage rules information separated in step S102 into the control information defined by AACS. That is, the information processing apparatus 400 executes the mapping process based on the mapping data described above with reference to FIGS. 21 to 23 to convert the set values of the usage rules information included in the broadcast delivery data into the set values of the control information defined by AACS to generate the usage rules information including the copy control information corresponding to AACS.

Next, in step S104, the information processing apparatus 400 records the usage rules information including the copy control information corresponding to AACS generated in step S103 in the usage rules information file (Usage File) that is management information defined by AACS.

### (Step S121)

Next, in step S121, the information processing apparatus 400 executes the process of recording the usage rules information including the copy control information corresponding to AACS generated in step S103 in the PMT (program map table) defined by BDAV to generate the PMT.

### (Step S122)

Next, in step S122, the information processing apparatus 400 stores the PMT recording the usage rules information including the copy control information corresponding to AACS generated in step S121 in the TS packets defined by BDAV and generates the stream file including the TS packet sequence defined by BDAV format including the PMT storage packets and the storage packets of the reproduction data, such as images, sound, and subtitles.

### (Steps S106 to S109)

The processes of steps S106 to S109 are processes similar to the processes of steps S106 to S109 in the flow described above with reference to FIG. 35.

First, in step S106, the information processing apparatus 400 generates the clip information files, the playlist files, and other database files defined by the BDAV format. Note that in the process, the usage rules information generated in the mapping process may be recorded in at least one of the clip information files or the playlist files.

Next, in step S107, the information processing apparatus 400 uses the generated AV stream files and database files to generate the BDAV format data.

Next, in step S108, the information processing apparatus 400 generates the management data file defined by AACS including the usage rules information file defined by AACS.

Next, in step S109, the information processing apparatus 400 records the BDAV format data and the AACS management data generated in step S107 and S108 in the information recording medium (media).

In the flow illustrated in FIG. 36, the usage rules information corresponding to AACS generated in the mapping process of the usage rules information included in the broadcast delivery data is stored in the TS packets included in the usage rules information files (Usage File) and the clip AV stream files.

### [9. Configuration and Process of Information Processing Apparatus That Executes Reproduction and Copying Process of Data Recorded in Information Recording Medium]

Next, the configuration and the process of the information processing apparatus that executes the reproduction and copying process of the data recorded in the information recording medium will be described with reference to FIG. 37 and the following drawings.

Note that, although the apparatus that reproduces or copies the BDAV format data and the process example will be described below as a representative example, the apparatus and the process described below can also be applied to the case of reproducing and copying the SPAV format data.

An information processing apparatus 500 illustrated in FIG. 37 is an information processing apparatus that reads and reproduces data recorded in an information recording medium (media) 550 or that copies and records the data in a second medium 510 that is another medium.

The information processing apparatus 500 reads the data recorded in the information recording medium (media) 550 that is an information recording medium, such as, for example, a BD (Blu-ray (registered trademark) Disc), and executes the reproduction or copying process.

The BDAV format data and the AACS management data are recorded in the information recording medium (media) 550. The recorded data is the broadcast content (program) that is the received data from the transmission apparatus, such as a broadcasting station. Furthermore, the usage rules information corresponding to the AACS provision generated in the conversion process (mapping) of the usage rules information received from the transmission apparatus, such as a broadcasting station, is recorded in the information recording medium (media) 550.

These are recorded in the usage rules information file (Usage File) as AACS management data or in the embedded control information, specifically, the PMT (program map table). Furthermore, part of the usage rules information, specifically, the trick mode control information (trick_mode_control_info), is recorded in the database files, such as a playlist and a clip information file.

The information processing apparatus 500 includes a control unit 501, a drive 502, a user input unit 503, a usage rules information checking unit 504, a storage unit 505, a reproduction data generation unit 506, an output apparatus 507, a copy data generation unit 508, a recording unit 509, and an output I/F 510 as illustrated in FIG. 37.

The recording unit 509 executes a process of recording copy data in a second medium 570. The output I/F 510 outputs the copy data to an external recording apparatus 580.

The control unit 501 controls the data processing executed by the information processing apparatus 500, such as data recording and reproduction using media and a data copying process between media. The control is performed according to, for example, a program stored in the storage unit 505.

The drive 502 reads and executes the data from the information recording medium (media) 550.

The user input unit 503 is an input unit, such as a switch, a button, and a touch panel, that can be operated by the user and is an input unit for instructing and inputting various processes, such as reproduction, copying, and recording.

The usage rules information checking unit 504 reads the usage rules information, such as copy control information, included in the data read from the information recording medium (media) 550 and checks the allowed usage mode. As described above, the usage rules information corresponding to the AACS provision generated in the conversion process (mapping) of the usage rules information received from the transmission apparatus, such as a broadcasting station, is recorded in the information recording medium (media) 550. These are recorded in at least one of the following.
(1) Usage rules information file (Usage File) set as AACS management data
(2) PMT (program map table) stored in TS packet included in clip AV stream file defined by BDAV and SPAV formats
   (= embedded copy control information (Embedded CCI))
(3) Playlist file
(4) Clip information file

The usage rules information checking unit 504 acquires the data of one of (1) to (4) described above to check the allowed usage mode of the data recorded in the information recording medium (media) 550.

The control unit 501 uses the allowed usage mode according to the result to execute the reproduction process or the copying process of the data read from the information recording medium (media) 550.

In the case of executing the reproduction process of the data read from the information recording medium (media) 550, the reproduction data generation unit 506 acquires the data read from the information recording medium (media) 550 stored in the storage unit 505, generates the reproduction data by executing, for example, a decoding process or the like, and outputs the reproduction data through the output apparatus 507, such as a display unit and a speaker.

Note that the data reproduction process is executed according to the allowed usage mode checked by the usage rules information checking unit 504.

Furthermore, in the case of executing the copying process of the data read from the information recording medium (media) 550, the copy data generation unit 506 acquires the data read from the information recording medium (media) 550 stored in the storage unit 505, generates the copy data, and executes the process of recording the copy data in the second medium 570 through the recording unit 509. Alternatively, the copy data generation unit 506 outputs the copy data to the external recording apparatus 580 that records the copy data in the medium through the output I/F 510.

Note that the data copying process is executed according to the allowed usage mode checked by the usage rules information checking unit 504.

Next, a sequence of the process executed by the information processing apparatus 500 illustrated in FIG. 37 will be described with reference to a flow chart illustrated in FIG. 38.

The process according to the flow illustrated in FIG. 38 can be executed under the control of a data processing unit (control unit) including a CPU with a program execution function according to a program stored in, for example, the storage unit of the information processing apparatus 500.

Hereinafter, the processes of the steps illustrated in the flow of FIG. 38 will be sequentially described.

### (Step S201)

First, in step S201, the information processing apparatus 500 acquires the stream file and the reproduction control information file selected according to, for example, data designation information input by the user. The reproduction control information file includes the playlist file and the clip information file. These are read and acquired from the information recording medium 550.

### (Step S202)

Next, in step S202, the information processing apparatus 500 acquires the usage rules information defined by AACS corresponding to the acquired stream file. Note that the usage rules information is acquired from one of the following pieces of data.
(1) Usage rules information file (Usage File) set as AACS management data
(2) PMT (program map table) stored in TS packet included in clip AV stream file defined by BDAV and SPAV formats
   (= embedded copy control information (Embedded CCI))
(3) Playlist file
(4) Clip information file

### (Step S203)

Next, in step S203, the information processing apparatus 500 executes a content using process according to the acquired usage rules information defined by AACS.

Specifically, the information processing apparatus 500 executes a reproduction process and a copying process according to the reproduction limitation information and the copy limitation information recorded in the acquired usage rules information defined by AACS.

Next, a process sequence executed by the information processing apparatus 500 in the case where the process designation of the user is the copying process will be described with reference to a flow chart illustrated in FIG. 39.

### (Step S251)

First, in step S251, the information processing apparatus 500 acquires the stream files and reproduction control information files selected according to, for example, copy data designation information input by the user. The reproduction control information files include the playlist files and the clip information files. These are read and acquired from the information recording medium 550.

### (Step S252)

Next, in step S252, the information processing apparatus 500 acquires the usage rules information defined by AACS corresponding to the acquired stream file. Note that the usage rules information is acquired from one of the following pieces of data.
(1) Usage rules information file (Usage File) set as AACS management data
(2) PMT (program map table) stored in TS packet included in clip AV stream file defined by BDAV and SPAV formats
   (= embedded copy control information (Embedded CCI))
(3) Playlist file
(4) Clip information file

### (Step S253)

Next, in step S253, the information processing apparatus 500 acquires the copy control information from the usage rules information acquired in step S252.

### (Step S254)

Next, in step S254, the information processing apparatus 500 determines whether or not the copy control information acquired in step S253 has a value indicating that copying is allowed.

In a case where the copy control information has a value indicating that copying is allowed, the process proceeds to step S255.

On the other hand, in a case where the copy control information does not have a value indicating that copying is allowed, the copying process is not executed, and the process ends.

### (Step S255)

Step S255 is a process executed in the case where it is determined that the copy control information has a value indicating that copying is allowed in step S254. In this case, the information processing apparatus 500 executes the copying process according to the recorded information of the usage rules information and updates the copy control information recorded in the usage rules information as necessary in step S255.

In this way, the information processing apparatus 500 executes the content using process according to the usage rules information defined by AACS recorded in the information recording medium.

The usage rules information defined by AACS recorded in the information recording medium is data obtained by converting the set values of the usage rules information included in the broadcast delivery data into the set values of the control information defined by AACS in the mapping process based on the mapping data described above with reference to FIGS. 21 to 23.

As a result, the information processing apparatus 500 executes the using process of the content recorded in the information recording medium under the usage control inheriting the usage rules information included in the broadcast delivery data.

### [10. Configuration Example of Information Processing Apparatus]

Next, a hardware configuration example of the information processing apparatus that can be applied as an information processing apparatus configured to record data in the information recording medium and execute the reproduction and copying process of the data recorded in the information recording medium will be described with reference to FIG. 40.

A CPU (Central Processing Unit) 601 functions as a data processing unit that executes various processes according to a program stored in a ROM (Read Only Memory) 602 or a storage unit 608. For example, the CPU 601 executes the process according to the sequence described in the embodiment. The program executed by the CPU 601, data, and the like are stored in a RAM (Random Access Memory) 603. The CPU 601, the ROM 602, and the RAM 603 are connected to each other through a bus 604.

The CPU 601 is connected to an input/output interface 605 through the bus 604. An input unit 606 including various switches, a keyboard, a mouse, a microphone, and the like and an output unit 607 including a display, a speaker, and the like are connected to the input/output interface 605. The CPU 601 executes various processes according to commands input from the input unit 606 and outputs processing results to, for example, the output unit 607.

The storage unit 608 connected to the input/output interface 605 includes, for example, a hard disk or the like and stores programs executed by the CPU 601 and various types of data. A communication unit 609 functions as a transmission and reception unit of data communication through a network, such as the Internet and a local area network, and further functions as a transmission and reception unit of a broadcast wave to communicate with an external apparatus.

A drive 610 connected to the input/output interface 605 drives a removable medium 611 including a semiconductor memory or the like, such as a magnetic disk, an optical disk, a magneto-optical disk, and a memory card, and records or reads data.

### [11. Conclusion of Configuration of Present Disclosure]

The embodiment of the present disclosure has been described in detail with reference to a specific embodiment. However, it is apparent that those skilled in the art can modify or substitute the embodiment without departing from the scope of the present disclosure. That is, the present invention is disclosed in a form of an example, and the present invention should not be restrictively interpreted. The section of the claims should be taken into account to determine the scope of the present disclosure.

Note that the technique disclosed in the present specification can also be configured as follows.
(1) An information processing apparatus including:
   a data processing unit that receives content transmitted by a transmission apparatus and usage rules information corresponding to the content and that records the content and the usage rules information in an information recording medium, in which
   the data processing unit is
      configured to execute a process of converting set values of usage rules information according to a first standard received from the transmission apparatus into usage rules information of a second standard different from the first standard and recording the usage rules information in the information recording medium, and
      configured to execute a mapping process using mapping data associating the set values of the usage rules information according to the first standard with set values of the usage rules information according to the second standard, to convert the set values of the usage rules information of different standards.
(2) The information processing apparatus according to (1), in which
   the usage rules information according to the first standard includes usage rules information defined by CI+ (CI Plus), and
   the usage rules information according to the second standard includes usage rules information defined by AACS.
(3) The information processing apparatus according to (2), in which
   the usage rules information according to the second standard includes usage rules information defined by AACS 1 or AACS 2.
(4) The information processing apparatus according to any one of (1) to (3), in which
   the usage rules information is usage rules information including copy control information.
(5) The information processing apparatus according to any one of (1) to (4), in which
   the data processing unit
   stores the usage rules information defined by AACS that includes usage rules information of the second standard generated in the mapping process, in a usage rules information file that includes AACS management data, to record the usage rules information in the information recording medium.
(6) The information processing apparatus according to any one of (1) to (5), in which
   the data processing unit
   stores the usage rules information of the second standard generated in the mapping process in a PMT (program map table) defined by an MPEG-2TS format, to record the usage rules information in the information recording medium.
(7) The information processing apparatus according to (6), in which
   the data processing unit
   stores the usage rules information of the second standard in a copy status descriptor of the PMT (program map table) to record the usage rules information in the information recording medium.
(8) The information processing apparatus according to any one of (1) to (7), in which
   the data processing unit
   stores the usage rules information of the second standard in at least one of a playlist file or a clip information file that is a reproduction control information file, to record the usage rules information in the information recording medium.
(9) The information processing apparatus according to any one of (1) to (8), in which
   the data processing unit
   records the content transmitted by the transmission apparatus in the information recording medium according to a BDAV format or an SPAV format.
(10) The information processing apparatus according to any one of (1) to (9), in which the data processing unit
   records, in the information recording medium, trick mode control information that is included in the usage rules information of the first standard and that indicates whether or not to allow special reproduction, as control information corresponding to information recording medium recorded content.
(11) The information processing apparatus according to (10), in which
   the data processing unit
   stores the trick mode control information in at least one of a playlist file or a clip information file, the files being reproduction control information files, to record the trick mode control information in the information recording medium.
(12) An information processing apparatus including:
   a data processing unit that executes a reproduction process or a copying process of broadcast content recorded in an information recording medium, in which
   the data processing unit is
      configured to acquire usage rules information included in recorded data of the information recording medium to execute a content reproduction or copying process in an allowed range recorded in the usage rules information, in which
   the usage rules information
      is information obtained by converting usage rules information according to a first standard that is delivered from a broadcasting station in conjunction with the broadcast content, into usage rules information of a second standard different from the first standard, and
   the data processing unit
      executes the content reproduction or copying process according to the usage rules information of the second standard inheriting the usage rules information according to the first standard delivered from the broadcasting station.
(13) The information processing apparatus according to (12), in which
   the usage rules information according to the first standard includes usage rules information of CI+ (CI Plus), and
   the usage rules information according to the second standard includes usage rules information of AACS 1 or AACS 2.
(14) An information recording medium storing recorded data including broadcast content and usage rules information corresponding to the broadcast content, in which
   the usage rules information includes
   information obtained by converting usage rules information according to a first standard that is delivered from a broadcasting station in conjunction with the broadcast content, into usage rules information of a second standard different from the first standard, and
   the information recording medium is capable of causing a reproduction apparatus that reproduces recorded content of the information recording medium to
   execute content usage control according to the usage rules information of the second standard to thereby execute content usage control inheriting the usage rules information according to the first standard delivered from the broadcasting station.
(15) The information recording medium according to (14), in which
   the usage rules information according to the first standard includes usage rules information of CI+ (CI Plus), and
   the usage rules information according to the second standard includes usage rules information of AACS 1 or AACS 2.
(16) An information processing method executed by an information processing apparatus, in which
   the information processing apparatus
   includes a data processing unit that receives content transmitted by a transmission apparatus and usage rules information corresponding to the content and that records the content and the usage rules information in an information recording medium,
   the data processing unit is
   configured to execute a process of converting set values of usage rules information according to a first standard received from the transmission apparatus into usage rules information of a second standard different from the first standard and recording the usage rules information in the information recording medium, and
   configured to execute a mapping process using mapping data associating the set values of the usage rules information according to the first standard with set values of the usage rules information according to the second standard, to convert the set values of the usage rules information of different standards.
(17) A program causing an information processing apparatus to execute information processing, in which
   the information processing apparatus
   includes a data processing unit that receives content transmitted by a transmission apparatus and usage rules information corresponding to the content and that records the content and the usage rules information in an information recording medium, and
   the program causes the data processing unit
   to execute a process of converting set values of usage rules information according to a first standard received from the transmission apparatus into usage rules information of a second standard different from the first standard and recording the usage rules information in the information recording medium, and
   to execute a mapping process using mapping data associating the set values of the usage rules information according to the first standard with set values of the usage rules information according to the second standard, to convert the set values of the usage rules information of different standards.

In addition, the series of processes described in the specification can be executed by hardware, software, or a composite configuration of the hardware and the software. In the case where the software executes the processes, the processes can be executed by installing the program recording the processing sequences on a memory in a computer incorporated into dedicated hardware or can be executed by installing the program on a general-purpose computer that can execute various processes. For example, the program can be recorded in advance in a recording medium. Other than installing the program on the computer from the recording medium, the program can be received through a network, such as a LAN (Local Area Network) and the Internet, and installed on a recording medium, such as a built-in hard disk.

Note that various processes described in the present specification may be executed not only in chronological order according to the description, but may also be executed in parallel or individually according to the processing capacity of the apparatus that executes the processes or as necessary. In addition, the system in the present specification is a logical set configuration of a plurality of apparatuses, and the apparatuses of each configuration may not be in the same housing.

### [Industrial Applicability]

As described above, according to the configuration of the embodiment of the present disclosure, the configuration that can execute the process according to the usage rules information inheriting the usage rules information delivered by the broadcasting station is realized in using the recorded content of the information recording medium.

Specifically, for example, the mapping process is executed to convert the set values of the usage rules information according to the first standard, such as CI+ (CI Plus), received from the broadcasting station into the usage rules information defined by the second standard, such as AACS, different from the first standard to record the usage rules information in the information recording medium. The apparatus that reproduces or copies the recorded content uses the content according to the usage rules information defined by AACS inheriting the usage rules information defined by CI+ (CI Plus) recorded in the information recording medium.

The present configuration realizes the configuration that can execute the process according to the usage rules information inheriting the usage rules information delivered by the broadcasting station in using the recorded content of the information recording medium.

### [Reference Signs List]

20 Transmission apparatus
21 Broadcasting station
22 Data delivery server
30 Information processing apparatus
31 Recording and reproducing apparatus
32 Television
33 PC
34 Portable terminal
40 Information recording medium (media)
41 BD
42 HDD
43 Flash memory
61 Recording and reproducing apparatus
62 Medium A
63 Medium B1
64 Medium B2
121 Usage rules information file
122 Embedded copy control information
400 Information processing apparatus
401 Data input unit
402 User input unit
403 Control unit
404 Storage unit
405 Demultiplexer
406 Recorded data generation unit
407 Recording unit
408 Drive
411 Subtitle data generation unit
412 Image data generation unit
413 Sound data generation unit
414 Auxiliary information generation unit
415 Multiplexer
416 Usage rules information file generation unit
417 Database file generation unit
420 Information recording medium
451 Data analysis unit
453 Stream file recording control information generation unit
454 Usage rules information file recorded data generation unit
455 Database file recorded data generation unit
500 Information processing apparatus
501 Control unit
502 Drive
503 User input unit
504 Usage rules information checking unit
505 Storage unit
506 Reproduction data generation unit
507 Output apparatus
508 Copy data generation unit
509 Recording unit
510 Output I/F
550 Information recording medium (media)
570 Second medium
580 External recording apparatus
601 CPU
602 ROM
603 RAM
604 Bus
605 Input/output interface
606 Input unit
607 Output unit
608 Storage unit
609 Communication unit
610 Drive
611 Removable medium

## Claims

1. An information processing apparatus comprising:
a data processing unit that receives content transmitted by a transmission apparatus and usage rules information corresponding to the content and that records the content and the usage rules information in an information recording medium, wherein
the data processing unit is
configured to execute a process of converting set values of usage rules information according to a first standard received from the transmission apparatus into usage rules information of a second standard different from the first standard and recording the usage rules information in the information recording medium, and
configured to execute a mapping process using mapping data associating the set values of the usage rules information according to the first standard with set values of the usage rules information according to the second standard, to convert set values of usage rules information of different standards.

2. The information processing apparatus according to claim 1, wherein
the usage rules information according to the first standard includes usage rules information defined by CI+ (CI Plus), and
the usage rules information according to the second standard includes usage rules information defined by AACS.

3. The information processing apparatus according to claim 2, wherein
the usage rules information according to the second standard includes usage rules information defined by AACS 1 or AACS 2.

4. The information processing apparatus according to claim 1, wherein
the usage rules information is usage rules information including copy control information.

5. The information processing apparatus according to claim 1, wherein
the data processing unit
stores usage rules information defined by AACS that includes usage rules information of the second standard generated in the mapping process in a usage rules information file that includes AACS management data to record the usage rules information in the information recording medium.

6. The information processing apparatus according to claim 1, wherein
the data processing unit
stores the usage rules information of the second standard generated in the mapping process in a PMT (program map table) defined by an MPEG-2TS format, to record the usage rules information in the information recording medium.

7. The information processing apparatus according to claim 6, wherein
the data processing unit
stores the usage rules information of the second standard in a copy status descriptor of the PMT (program map table) to record the usage rules information in the information recording medium.

8. The information processing apparatus according to claim 1, wherein
the data processing unit
stores the usage rules information of the second standard in at least one of a playlist file or a clip information file that a reproduction control information file to record the usage rules information in the information recording medium.

9. The information processing apparatus according to claim 1, wherein
the data processing unit
records the content transmitted by the transmission apparatus in the information recording medium according to a BDAV format or an SPAV format.

10. The information processing apparatus according to claim 1, wherein
the data processing unit
records, in the information recording medium, trick mode control information that is included in the usage rules information of the first standard and that indicates whether or not to allow special reproduction as control information corresponding to information recording medium recorded content.

11. The information processing apparatus according to claim 10, wherein
the data processing unit
stores the trick mode control information in at least one of a playlist file or a clip information file, the files being reproduction control information files, to record the trick mode control information in the information recording medium.

12. An information processing apparatus comprising:
a data processing unit that executes a reproduction process or a copying process of broadcast content recorded in an information recording medium, wherein
the data processing unit is
configured to acquire usage rules information included in recorded data of the information recording medium to execute a content reproduction or copying process in an allowed range recorded in the usage rules information,
the usage rules information
is information obtained by converting usage rules information according to a first standard delivered from a broadcasting station in conjunction with the broadcast content into usage rules information of a second standard different from the first standard, and
the data processing unit
executes the content reproduction or copying process according to the usage rules information of the second standard inheriting the usage rules information according to the first standard delivered from the broadcasting station.

13. The information processing apparatus according to claim 12, wherein
the usage rules information according to the first standard includes usage rules information of CI+ (CI Plus), and
the usage rules information according to the second standard includes usage rules information of AACS 1 or AACS 2.

14. An information recording medium storing recorded data including broadcast content and usage rules information corresponding to the broadcast content, wherein
the usage rules information includes
information obtained by converting usage rules information according to a first standard delivered from a broadcasting station in conjunction with the broadcast content into usage rules information of a second standard different from the first standard, and
the information recording medium is capable of causing a reproduction apparatus that reproduces recorded content of the information recording medium to
execute content usage control according to the usage rules information of the second standard to thereby execute content usage control inheriting the usage rules information according to the first standard delivered from the broadcasting station.

15. The information recording medium according to claim 14, wherein
the usage rules information according to the first standard includes usage rules information of CI+ (CI Plus), and
the usage rules information according to the second standard includes usage rules information of AACS 1 or AACS 2.

16. An information processing method executed by an information processing apparatus, wherein
the information processing apparatus
includes a data processing unit that receives content transmitted by a transmission apparatus and usage rules information corresponding to the content and that records the content and the usage rules information in an information recording medium,
the data processing unit is
configured to execute a process of converting set values of usage rules information according to a first standard received from the transmission apparatus into usage rules information of a second standard different from the first standard and recording the usage rules information in the information recording medium, and
configured to execute a mapping process using mapping data associating the set values of the usage rules information according to the first standard with set values of the usage rules information according to the second standard to convert set values of usage rules information of different standards.

17. A program causing an information processing apparatus to execute information processing, wherein
the information processing apparatus
includes a data processing unit that receives content transmitted by a transmission apparatus and usage rules information corresponding to the content and that records the content and the usage rules information in an information recording medium, and
the program causes the data processing unit
to execute a process of converting set values of usage rules information according to a first standard received from the transmission apparatus into usage rules information of a second standard different from the first standard and recording the usage rules information in the information recording medium, and
to execute a mapping process using mapping data associating the set values of the usage rules information according to the first standard with set values of the usage rules information according to the second standard to convert set values of usage rules information of different standards.
